(19) Europäisches Patentamt
European Patent Office
Office européen des brevets

(11) **EP 4 287 157 A1**

(12) **EUROPÄISCHE PATENTANMELDUNG**

(43) Veröffentlichungstag:
**06.12.2023  Patentblatt 2023/49**

(21) Anmeldenummer: **22176477.2**

(22) Anmeldetag: **31.05.2022**

(51) Internationale Patentklassifikation (IPC):
**G08G 1/01** (2006.01)   **G08G 1/16** (2006.01)
**H04W 4/40** (2018.01)   **H04W 88/04** (2009.01)

(52) Gemeinsame Patentklassifikation (CPC):
**G08G 1/0112; G08G 1/0116; G08G 1/0133;
G08G 1/167; H04W 4/40; H04W 88/04**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Deutsche Telekom AG
53113 Bonn (DE)**

(72) Erfinder:
 • **SUDHOLT, Frank
  53604 Bad Honnef (DE)**

 • **SCHMITT, Florian-Leon
  53227 Bonn (DE)**

(74) Vertreter: **Schwöbel, Thilo K. et al
Kutzenberger Wolff & Partner
Waidmarkt 11
50676 Köln (DE)**

Bemerkungen:
Geänderte Patentansprüche gemäss Regel 137(2) EPÜ.

(54) **VERFAHREN ZUR ERMITTLUNG ODER ZUR ZUORDNUNG EINER FAHRSPURINFORMATION BEZÜGLICH MEHRERER SICH AUF EINEM STRECKENABSCHNITT BEFINDENDER VERKEHRSTEILNEHMER, TELEKOMMUNIKATIONSNETZ ODER SYSTEM, VERKEHRSTEILNEHMER, COMPUTERPROGRAMM UND COMPUTERLESBARES MEDIUM**

(57)    Es wird ein Verfahren zur Ermittlung oder zur Zuordnung einer Fahrspurinformation bezüglich mehrerer sich auf einem Streckenabschnitt befindender Verkehrsteilnehmer, wobei zur Ermittlung oder zur Zuordnung der Fahrspurinformation bezüglich der Verkehrsteilnehmer die Erfassung
-- einer Positionsinformation der momentanen Position der Verkehrsteilnehmer,
-- einer Geschwindigkeitsinformation der Verkehrsteilnehmer
und
-- einer Fahrzeugtypinformation und/oder einer Fahrzeugkategorieinformation erfolgt,
wobei zur Ermittlung oder zur Zuordnung der Fahrspurinformation für die mehreren Verkehrsteilnehmer die nachfolgenden Schritte ausgeführt werden:
-- in einem ersten Schritt wird zu einem betrachteten Streckenabschnitt die vorhandene Anzahl an Fahrspuren ermittelt oder von einer Datenbank abgerufen,
-- in einem nachfolgenden zweiten Schritt wird jedem der Verkehrsteilnehmer eine jeweilige Fahrspurinformation ermittelt oder zugeordnet.

Fig. 1

EP 4 287 157 A1

**Beschreibung**

Stand der Technik

Die Erfindung betrifft ein Verfahren zur Ermittlung oder zur Zuordnung einer Fahrspurinformation bezüglich mehrerer sich auf einem Streckenabschnitt befindender Verkehrsteilnehmer.

Die Erfindung betrifft des Weiteren ein Telekommunikationsnetz oder ein System zur Ermittlung oder zur Zuordnung einer Fahrspurinformation bezüglich mehrerer sich auf einem Streckenabschnitt befindender Verkehrsteilnehmer.

Die Erfindung betrifft ferner einen Verkehrsteilnehmer zur Verwendung in einem erfindungsgemäßen Telekommunikationsnetz oder in einem erfindungsgemäßen System.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Bei vorbekannten Telekommunikationsnetzen ist es bereits bekannt, eine Gerät-zu-Gerät-Kommunikation (device-to-device communication) zu verwenden. Dies ist auch der Fall bei der zellularen V2X-Kmmunikation (C-V2X), welche die Möglichkeit zur Verfügung stellt, dass Kommunikationsteilnehmer bzw. Verkehrsteilnehmer Nachrichten authentisch bzw. autorisiert, anonym, sowie direkt (d.h. ohne Einbindung des Mobilfunknetzes, insbesondere über die PC5 Sidelink Funktionalität) in einer begrenzten Umgebung austauschen, insbesondere um Hauptanwendungsfälle wie Verkehrssicherheit, Verkehrsmanagement und Infotainment umsetzen zu können.

Bei vorbekannten Verfahren zur Ermittlung oder zur Zuordnung einer Fahrspurinformation bezüglich mehrerer sich auf einem Streckenabschnitt befindender Verkehrsteilnehmer sind Probleme zu lösen, die sich beziehen beispielsweise auf die Aktualität und Genauigkeit der Daten oder Ergebnisse sowie die Kosten des Verfahrens bzgl. des Aufbaus einer Infrastruktur.

Offenbarung der Erfindung

Der Erfindung liegt die Aufgabe zugrunde, ein Verfahren bzw. eine Methode zur Ermittlung oder zur Zuordnung einer Fahrspurinformation bezüglich mehrerer sich auf einem Streckenabschnitt befindender Verkehrsteilnehmer bereitzustellen, insbesondere für ggf. verschiedene Strecken in einem Verkehrssystem, welches in einem Verkehrssystem (z.B. Intelligent Transport System (ITS)) mit V2X-Kommunikation kostengünstig, präzise (zum Zeitpunkt der Berechnung), aktuell und anonym ist, sowie mit Datenerhebung rein über V2X-Broadcast-Nachrichten auskommt.

Die Aufgabe wird erfindungsgemäß gelöst durch ein Verfahren zur Ermittlung oder zur Zuordnung einer Fahrspurinformation bezüglich mehrerer sich auf einem Streckenabschnitt befindender Verkehrsteilnehmer, wobei zur Ermittlung oder zur Zuordnung der Fahrspurinformation bezüglich der Verkehrsteilnehmer die Erfassung

-- einer Positionsinformation der momentanen Position der Verkehrsteilnehmer,
-- einer Geschwindigkeitsinformation der Verkehrsteilnehmer und
-- einer Fahrzeugtypinformation und/oder einer Fahrzeugkategorieinformation erfolgt,

wobei zur Ermittlung oder zur Zuordnung der Fahrspurinformation für die mehreren Verkehrsteilnehmer die nachfolgenden Schritte ausgeführt werden:

-- in einem ersten Schritt wird zu einem betrachteten Streckenabschnitt die vorhandene Anzahl an Fahrspuren ermittelt oder von einer Datenbank abgerufen,
-- in einem nachfolgenden zweiten Schritt wird jedem der Verkehrsteilnehmer eine jeweilige Fahrspurinformation ermittelt oder zugeordnet.

Es ist dadurch gemäß der vorliegenden Erfindung in vorteilhafter Weise möglich, dass die Ermittlung oder die Zuordnung einer Fahrspurinformation bezüglich mehrerer sich auf einem Streckenabschnitt befindender Verkehrsteilnehmer (bzw. die Bestimmung eines Schätzwertes bzw. eines Vorhersagewertes hierfür) genauer bzw. mit einer höheren Präzision bzw. Vorhersagegenauigkeit möglich ist, wobei gleichzeitig der Aufwand für die Realisierung bzw. Bereitstellung eines solchen Systems vergleichsweise gering ist.

Erfindungsgemäß ist es somit vorgesehen, dass - zur Ermittlung oder zur Zuordnung einer Fahrspurinformation bezüglich mehrerer sich auf einem Streckenabschnitt befindender Verkehrsteilnehmer - zunächst zu einem betrachteten Streckenabschnitt die vorhandene Anzahl an Fahrspuren ermittelt oder von einer Datenbank abgerufen wird; sodann wird jedem der Verkehrsteilnehmer eine jeweilige Fahrspurinformation ermittelt oder zugeordnet. Damit ist es erfindungsgemäß möglich, dass eine Fahrspurinformation bezüglich mehrerer sich auf einem Streckenabschnitt befindender Verkehrsteilnehmer bestimmt wird bzw. bestimmbar ist bzw. ein Schätzwert bzw. ein Vorhersagewert für eine solche Fahrspurinformation bestimmbar ist.

Aus dem Stand der Technik sind bereits Methoden der Fahrspur-Erkennung (bzw. nachfolgend kurz auch als Spur-Erkennung bezeichnet), aber diese Methoden nutzen in der Regel FZG-zu-FZG Messungen oder FZG-zu-Fahrspur Messungen mit elektro-optischen Methoden oder sie nutzen hochgenaue GNSS Lokalisierungsmethoden zusammen mit hochgenau vermessenen Fahrbahnspuren. Auch gibt es Methoden die über erdgebundene Sensoren wie Radar oder digitale Kameras in einem lokal stark begrenzten Bereich die Position von FZGen auf einer Fahrbahn hochgenau bestimmen können. Selbst mit Fernerkundungsmethoden aus Satelliten können Spurbestimmungen durchgeführt werden. Alle diese bekannten Methoden setzen immer vieles voraus (z.B. teures Equipment, flächendeckende lückenlose erdgebundene Installationen, tolerierbarer hoher Datentransfer, tolerierbarer Zeitverzug zwischen Datenerhebung und Bestimmung der Lage der Spur auf einer mehrspurigen Fahrbahn, tolerierbare Privacy Verletzung), was man nach Möglichkeit aber wegen der damit verbundenen Nachteile möglichst vermeiden möchte.

Bei der spurspezifischen Verkehrszählung werden gemäß bekannter Methoden erdgebundene bodenfeste Sensoren wie digitale Kameras verwendet, um hiermit die Anzahl von FZGen pro Zeiteinheit an einem Straßenquerschnitt (die Verkehrsstärke) bestimmen zu können. Die bekannte FCD Methode (Floating Car Data) mit ihren bekannten Privacy Verletzungen und den dadurch verursachten großen Abweichungen vom Ziel, alle FZGe zu zählen, eignet sich nicht zur Bestimmung genauer Verkehrsstärken. Im Zusammenhang mit der FCD Datenerhebungsmethode wird jedoch nicht die Fahrspur eines FZGs auf einer mehrspurigen Fahrbahn bestimmt; weitere Nachteile umfassen insbesondere die Notwendigkeit zur Verwendung von teurem Equipment zur flächendeckenden lückenlosen erdgebundenen Installation, sowie Privacy Verletzung.

Soll die Fahrspurbestimmung sogar zur Verbesserung von Fahrspur- und ggf. auch FZG-Typ-spezifischen Verkehrsinformationen genutzt werden (z.B. zur Prognose von Fahrdauern auf einem Straßenabschnitt), so muss die Fahrspurbestimmung für möglichst alle FZGe auf einer längeren Strecke lückenlos und zeitgleich durchführbar sein; luftgestützte Methoden (basierend auf Flugzeugen oder Satelliten) sind hierzu in der Regel zu teuer; das gleiche gilt für bodenfeste Sensoren.

Erfindungsgemäß wird eine FZG-gebundene Messmethode angegeben, die vergleichsweise kostengünstig implementierbar ist und (aufgrund eines vergleichsweise geringen Nachrüstungsaufwands) möglichst von allen FZGen auf dem längeren Streckenstück genutzt werden kann .

Gemäß einer bevorzugten Ausführungsform der vorliegenden Erfindung ist es vorgesehen, dass in einem ersten Teilschritt des zweiten Schritts jedem der Verkehrsteilnehmer eine jeweilige vorläufige Fahrspurinformation ermittelt oder zugeordnet wird, wobei in einem zweiten Teilschritt des zweiten Schritts geprüft wird, ob die vorläufige Fahrspurinformation anzupassen oder zu korrigieren ist, wobei, sofern die vorläufige Fahrspurinformation zu korrigieren ist, in einem dritten Teilschritt des zweiten Schritts auf der Basis der vorläufigen Fahrspurinformation eine korrigierte Fahrspurinformation für zumindest einen Teil der Verkehrsteilnehmer ermittelt oder zugeordnet wird, wobei in einem vierten Teilschritt des zweiten Schritts die korrigierte Fahrspurinformation als die Fahrspurinformation dem jeweiligen Verkehrsteilnehmer zugeordnet wird.

Hierdurch ist es erfindungsgemäß vorteilhaft möglich, dass in vergleichsweise einfacher Art und Weise die Bestimmung der Fahrspurinformation (bzw. die Bestimmung eines Schätzwertes bzw. eines Vorhersagewertes für die Fahrspurinformation) genauer bzw. mit einer höheren Präzision bzw. Vorhersagegenauigkeit möglich ist.

Gemäß einer weiteren Ausführungsform der vorliegenden Erfindung ist es bevorzugt vorgesehen, dass vor der Durchführung des vierten Teilschritts der zweite Teilschritt und der dritte Teilschritt wiederholt, insbesondere iterativ, durchgeführt wird, wobei geprüft wird, ob die korrigierte Fahrspurinformation erneut zu korrigieren ist und, falls ja, eine weitere korrigierte Fahrspurinformation für zumindest einen Teil der Verkehrsteilnehmer ermittelt oder zugeordnet wird.

Hierdurch ist es erfindungsgemäß in vorteilhafter Weise möglich, dass die Bestimmung der Fahrspurinformation bzw. eines Schätz- oder Vorhersagewertes dafür in einfacher und effizienter Weise flexibel durchgeführt werden kann, insbesondere durch den Verkehrsteilnehmer selbst oder eine Berechnungseinrichtung desselben; ferner ist es dadurch in vorteilhafter Weise möglich, dass die Ermittlung der Fahrspurinformation in Abhängigkeit einer Fahrzeugtypinformation differenziert durchgeführt werden kann.

Gemäß einer weiteren Ausführungsform der vorliegenden Erfindung ist es bevorzugt vorgesehen, dass der erste und zweite Schritt zur Ermittlung oder zur Zuordnung einer Fahrspurinformation

-- durch den Verkehrsteilnehmer selbst oder durch eine Berechnungseinrichtung desselben oder
-- durch eine extern zum Verkehrsteilnehmer existierende Einrichtung durchgeführt wird.

---

**EP 4 287 157 A1**

Hierdurch ist es erfindungsgemäß insbesondere vorteilhaft möglich, dass die Bestimmung der Fahrspurinformation bzw. eines Schätz- oder Vorhersagewertes dafür in einfacher und effizienter Weise flexibel durchgeführt werden kann, insbesondere durch den Verkehrsteilnehmer selbst oder eine Berechnungseinrichtung desselben; ferner ist es dadurch in vorteilhafter Weise möglich, dass die Ermittlung der Fahrspurinformation in Abhängigkeit einer Fahrzeugtypinformation differenziert durchgeführt werden kann.

Gemäß einer weiteren Ausführungsform der vorliegenden Erfindung ist es bevorzugt vorgesehen, dass die auf dem Streckenabschnitt zu erfassende momentane Position und Geschwindigkeit der Verkehrsteilnehmer sowie die Fahrzeugtypinformation und/oder die Fahrzeugkategorieinformation durch Übermitteln - innerhalb eines geographischen Gebiets - eines Nachrichteninhalts von einem stationären Sender zu einem stationären Empfänger über die Mehrzahl der mobilen Verkehrsteilnehmer erfolgt, wobei sowohl der Sender als auch die Mehrzahl von mobilen Verkehrsteilnehmern Broadcast-Nachrichten mit einem Nachrichteninhalt zu senden in der Lage sind und wobei der stationäre Empfänger in der Lage ist, Broadcast-Nachrichten zu empfangen, wobei der Nachrichteninhalt wenigstens einer Broadcast-Nachricht des Senders an wenigstens einen der Mehrzahl von mobilen Verkehrsteilnehmern mittels der wenigstens einen Broadcast-Nachricht mittels einer PC5-Sidelink Funktionalität, insbesondere unter Nutzung der Mode-4-Funktionalität, gesendet wird,

wobei das Verfahren zeitlich vor dem ersten Schritt die nachfolgenden Schritte umfasst:

-- in einem dritten Schritt empfängt der betrachtete Verkehrsteilnehmer wenigstens eine Broadcast-Nachricht, wobei der Nachrichteninhalt der wenigstens einen Broadcast-Nachricht wenigstens

-- eine Nachrichtenidentifikationsinformation,
-- eine Gebietsinformation zur Definition des geographischen Gebiets
-- eine Wiederholungsinformation und
-- eine Aggregationszeitinformation

umfasst,
-- in einem nachfolgenden vierten Schritt sendet der betrachtete Verkehrsteilnehmer wenigstens eine weitere Broadcast-Nachricht, wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:

-- eine Positionsinformation der momentanen Position des betrachteten Verkehrsteilnehmers,
-- eine Geschwindigkeitsinformation des betrachteten Verkehrsteilnehmers
-- eine momentane Zeitstempelinformation und
-- eine Zusatzinformation

umfasst.

Hierdurch ist es gemäß einer solchen Ausführungsform der Erfindung vorteilhaft möglich das erfindungsgemäße Verfahren einfach und effizient durchzuführen und eine entsprechende Fahrspurinformation bereitzustellen.

Gemäß einer weiteren Ausführungsform der vorliegenden Erfindung ist es bevorzugt vorgesehen, dass das geographische Gebiet den Streckenabschnitt umfasst, wobei der Streckenabschnitt insbesondere einem Streckenabschnitt eines Verkehrsweges, insbesondere einer Straße, etwa einer Schnellstraße oder Autobahn, entspricht oder das geographische Gebiet den entsprechenden Bereich des Streckenabschnitts definiert,
wobei insbesondere die Gebietsinformation eine Richtungsinformation umfasst und/oder wobei die Gebietsinformation eine Positionsinformation des stationären Empfängers umfasst.

Hierdurch ist es gemäß einer solchen Ausführungsform der Erfindung vorteilhaft möglich das erfindungsgemäße Verfahren einfach und effizient durchzuführen und eine entsprechende Fahrspurinformation bereitzustellen.

Gemäß einer weiteren Ausführungsform der vorliegenden Erfindung ist es bevorzugt vorgesehen, dass die Positionsinformation der momentanen Position des betrachteten Verkehrsteilnehmers eine Positionsinformation auf dem Streckenabschnitt des Verkehrsweges ist und/oder
dass die Zusatzinformation wenigstens eine der nachfolgenden Informationen umfasst:

-- eine Information zur maximalen Geschwindigkeit des Fahrzeugs,
-- eine das Fahrzeug identifizierende, insbesondere das Fahrzeug pseudonym identifizierende Information,

wobei insbesondere die Fahrzeugtypinformation und/oder die Fahrzeugkategorieinformation angibt, ob es sich um einen Personenkraftwagen oder um einen Lastkraftwagen handelt und/oder ob es sich um einen Sportwagen oder um eine Limousine oder um einen Kombinationskraftwagen oder um ein Sports Utility Vehicle oder um einen Lastkraftwagen mit Anhänger handelt.

Hierdurch ist es gemäß einer solchen Ausführungsform der Erfindung vorteilhaft möglich das erfindungsgemäße Verfahren besonders einfach und effizient durchzuführen.

Gemäß einer weiteren Ausführungsform der vorliegenden Erfindung ist es bevorzugt vorgesehen, dass der betrachtete Verkehrsteilnehmer die wenigstens eine weitere Broadcast-Nachricht lediglich dann sendet, wenn die momentane oder zuletzt ermittelte Position des betrachteten Verkehrsteilnehmers durch Positionsbestimmungsmittel des betrachteten Verkehrsteilnehmers als innerhalb des geographischen Gebiets erkannt wird oder wenn der betrachtete Verkehrsteilnehmer durch die Positionsbestimmungsmittel als auf dem Abschnitt des Verkehrsweges befindlich erkannt wird und/oder auf dem Abschnitt des Verkehrsweges in Richtung oder entsprechend der Richtungsinformation sich fortbewegend erkannt wird.

Hierdurch ist es gemäß einer solchen Ausführungsform der Erfindung vorteilhaft möglich das erfindungsgemäße Verfahren besonders einfach und effizient durchzuführen.

Gemäß einer weiteren Ausführungsform der vorliegenden Erfindung ist es bevorzugt vorgesehen, dass der betrachtete Verkehrsteilnehmer die wenigstens eine weitere Broadcast-Nachricht frühestens nach Ablauf eines Zeitintervalls nach dem im dritten Schritt erfolgenden Empfang der wenigstens einen Broadcast-Nachricht sendet, wobei das Zeitintervall der Aggregationszeitinformation entspricht oder als Teil der Aggregationszeitinformation definiert ist, wobei insbesondere die durch den betrachteten Verkehrsteilnehmer empfangene wenigstens eine Broadcast-Nachricht

-- eine vom stationären Sender gesendete Broadcast-Nachricht ist oder
-- eine von einem anderen Verkehrsteilnehmer gesendete weitere Broadcast-Nachricht ist,

wobei das Verfahren insbesondere aufweist:

-- der betrachtete Verkehrsteilnehmer empfängt innerhalb des Zeitintervalls zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und

-- der betrachtete Verkehrsteilnehmer sendet die wenigstens eine weitere Broadcast-Nachricht derart, dass die wenigstens eine weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des Zeitintervalls von den zusätzlichen anderen Verkehrsteilnehmern empfangenen zusätzlichen weiteren Broadcast-Nachrichten umfasst,

wobei insbesondere die zusätzlichen Ergänzungsinformationen derart bereinigt werden, dass kein Verkehrsteilnehmer doppelt berücksichtigt ist.

Hierdurch ist es gemäß einer solchen Ausführungsform der Erfindung vorteilhaft möglich das erfindungsgemäße Verfahren besonders einfach und effizient durchzuführen.

Des Weiteren wird die Aufgabe gelöst durch ein Telekommunikationsnetz oder ein System zur Ermittlung oder zur Zuordnung einer Fahrspurinformation bezüglich mehrerer sich auf einem Streckenabschnitt befindender Verkehrsteilnehmer, wobei zur Ermittlung oder zur Zuordnung der Fahrspurinformation bezüglich der Verkehrsteilnehmer die Erfassung

-- einer Positionsinformation der momentanen Position der Verkehrsteilnehmer,
-- einer Geschwindigkeitsinformation der Verkehrsteilnehmer
und
-- einer Fahrzeugtypinformation und/oder einer Fahrzeugkategorieinformation erfolgt,

wobei das Telekommunikationsnetz oder das System zur Ermittlung oder zur Zuordnung der Fahrspurinformation für die mehreren Verkehrsteilnehmer derart konfiguriert ist, dass:

-- zu einem betrachteten Streckenabschnitt wird die vorhandene Anzahl an Fahrspuren ermittelt oder von einer Datenbank abgerufen,
-- zu jedem der Verkehrsteilnehmer wird eine jeweilige Fahrspurinformation ermittelt oder zugeordnet.

Es ist dadurch gemäß der vorliegenden Erfindung in vorteilhafter Weise möglich, ein zum erfindungsgemäßen Verfahren korrespondierendes erfindungsgemäßes Telekommunikationsnetz oder System bereitzustellen.

Die Aufgabe wird ferner gelöst durch einen Verkehrsteilnehmer, welcher insbesondere als ein Kommunikationsteilnehmer agiert, d.h. insbesondere als Sender oder Empfänger, zur Verwendung in einem erfindungsgemäßen Telekommunikationsnetz oder System.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf einem Netzknoten in Form eines Senders und/oder Empfängers und/oder eines Verkehrsteilnehmers, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf einem Netzknoten in Form eines Senders und/oder Empfängers und/oder eines Verkehrsteilnehmer, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

Kurze Beschreibung der Zeichnungen

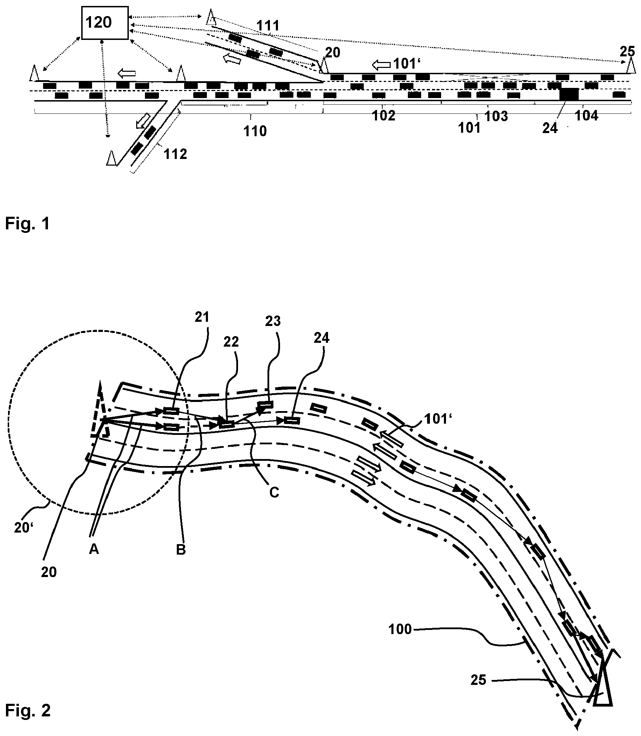

**Figur 1** zeigt eine schematische Situation einer Mehrzahl von Verkehrsteilnehmern auf einem Streckenabschnitt, wobei zur Ermittlung der Fahrspurinformation bezüglich mehrerer sich auf einem Streckenabschnitt befindender Verkehrsteilnehmer zu einem betrachteten Streckenabschnitt die vorhandene Anzahl an Fahrspuren ermittelt oder von einer Datenbank abgerufen wird und zu jedem der Verkehrsteilnehmer eine jeweilige Fahrspurinformation ermittelt oder zugeordnet wird.

**Figur 2** zeigt eine schematische Situation einer Mehrzahl von Verkehrsteilnehmern (die als Kommunikationsteilnehmer fungieren) innerhalb eines geographischen Gebiets zur Übertragung eines Nachrichteninhalts von einem stationären Sender zu einem stationären Empfänger über eine Mehrzahl von mobilen Verkehrsteilnehmern zur Erfassung einer Positionsinformation der momentanen Position der Verkehrsteilnehmer und einer Geschwindigkeitsinformation der Verkehrsteilnehmer.

Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

In Figur 2 ist schematisch eine Situation einer Mehrzahl von (in aller Regel mobilen) Verkehrsteilnehmern 21, 22, 23, 24 (die als Kommunikationsteilnehmer fungieren) innerhalb eines geographischen Gebiets 100 zur Übertragung eines Nachrichteninhalts von einem stationären Sender 20 zu einem stationären Empfänger 25 über eine Mehrzahl von mobilen Verkehrsteilnehmern 21, 22, 23, 24 zur Erfassung einer Positionsinformation der momentanen Position der Verkehrsteilnehmer und einer Geschwindigkeitsinformation der Verkehrsteilnehmer 21, 22, 23, 24 zur Ermittlung einer Fahrspurinformation bezüglich mehrerer sich auf einem Streckenabschnitt befindender Verkehrsteilnehmer (und insbesondere auch zur Ermittlung der voraussichtlichen Fahrzeit bzw. Fahrdauer der Verkehrsteilnehmer 21, 22, 23, 24) dargestellt. In Figur 2 sind mehrere Verkehrsteilnehmer dargestellt, wobei jedoch lediglich ein erster Verkehrsteilnehmer 21, ein zweiter Verkehrsteilnehmer 22, ein dritter Verkehrsteilnehmer 23 und ein vierter Verkehrsteilnehmer 24 mittels Bezugszeichen benannt ist. Hierbei ist sowohl der Sender 20 als auch die Mehrzahl von mobilen Verkehrsteilnehmern 21, 22, 23, 24 in der Lage, Broadcast-Nachrichten mit einem Nachrichteninhalt zu senden. Der stationäre Empfänger 25 ist jedenfalls (zumindest) in der Lage, Broadcast-Nachrichten zu empfangen. Der Nachrichteninhalt wenigstens einer Broadcast-Nachricht des Senders 20 wird erfindungsgemäß an wenigstens einen Verkehrsteilnehmer 21, 22, 23, 24 der Mehrzahl von mobilen Verkehrsteilnehmern 21, 22, 23, 24 mittels der wenigstens einen Broadcast-Nachricht mittels einer PC5-Sidelink Funktionalität, insbesondere unter Nutzung der Mode-4-Funktionalität, gesendet. Der unmittelbare Empfang einer betrachteten, vom Sender 20 ausgesandten Broadcast-Nachricht (und damit der Empfang ihres Nachrichteninhalts) durch einen Verkehrsteilnehmer 21, 22, 23, 24 (oder eine Mehrzahl solcher Verkehrsteilnehmer 21, 22, 23, 24) setzt voraus, dass sich der Verkehrsteilnehmer bzw. die Verkehrsteilnehmer 21, 22, 23, 24 innerhalb eines Sendegebiets 20' bzw. Funkabdeckungsbereichs 20' des Senders 20 befindet/befinden. Der Funkabdeckungsbereich 20' kann somit als derjenige räumliche Bereich (in Figur 2 beispielhaft um den Sender 20 herum) angesehen werden, innerhalb dessen von diesem Kommunikationsteilnehmer (d.h. vorliegend vom Sender 20) ausgesandte bzw. abgestrahlte Funksignale, insbesondere umfassend eine oder mehrere Broadcast-Nachrichten, noch eine Signalstärke bzw. Signaleigenschaften derart aufweisen, dass die anderen Verkehrsteilnehmer 21, 22, 23, 24 als Kommunikationsteilnehmer diese empfangen und verarbeiten, d.h. ggf. prozessieren und/oder entschlüsseln, können. Der ungefähre Radius des (im Wesentlichen kreisförmig gedachten) Funkabdeckungsbereichs 20' liegt typischerweise im Bereich zwischen ca. 50 m und mehreren hundert Metern, beispielsweise 200 m, 300 m, 400 m oder 500 m.

Erfindungsgemäß ist es vorgesehen, dass - nach dem Empfang einer betrachteten (vom Sender 20 ausgehenden) Broadcast-Nachricht durch beispielsweise den ersten Verkehrsteilnehmer 21 (d.h. in seiner Eigenschaft als Kommunikationsteilnehmer bzw. als Teilnehmer des erfindungsgemäßen Verfahrensablaufs) - dieser erste Verkehrsteilnehmer 21 wiederum als Sender fungiert und eine weitere Broadcast-Nachricht (insbesondere mittels einer PC5-Sidelink Funktionalität, insbesondere unter Nutzung der Mode-4-Funktionalität) sendet, wobei auch hierfür ein (mit dem des Senders 20 vergleichbarer) Senderadius und ein für den ersten Verkehrsteilnehmer 21 zu betrachtenden Funkabdeckungsbereich existiert bzw. anzunehmen ist, der jedoch der Einfachheit halber in Figur 2 nicht eigens gezeichnet und benannt ist; Gleiches gilt für die weiteren Verkehrsteilnehmer, insbesondere den zweiten, dritten und vierten Verkehrsteilnehmer 22, 23, 24.

Erfindungsgemäß ist es somit vorgesehen, dass zwischen dem Sender 20 und dem Empfänger 25, d.h. im Bereich des geographischen Gebiets 100, mehrere Verkehrsteilnehmer 21, 22, 23, 24, welche als Kommunikationsteilnehmer fungieren, derart jeweils zunächst eine Broadcast-Nachricht mit einem bestimmten Nachrichteninhalt (bzw. mehrere Broadcast-Nachrichten mit jeweils einem bestimmten Nachrichteninhalt) empfangen und sodann (zumindest in der Regel) eine weitere Broadcast-Nachricht mit einem weiteren Nachrichteninhalt senden, dass durch den Empfänger 25 zumindest eine Broadcast-Nachricht eines bestimmten Nachrichteninhalts empfangen wird. Dies ist in Figur 2 schematisch mittels zweier Pfeile A dargestellt, welche das Aussenden einer initialen Broadcast-Nachricht (d.h. quasi zum Zeitpunkt t = 0) vom Sender 20 bezeichnen sollen sowie deren Empfang durch zwei Verkehrsteilnehmer, darunter auch den ersten Verkehrsteilnehmer 21. Mittels eines Pfeils B ist in Figur 2 angedeutet, dass der erste Verkehrsteilnehmer 21 zu einem späteren Zeitpunkt (nach t = dt) eine erste weitere Broadcast-Nachricht aussendet, welche vom zweiten Verkehrsteilnehmer 22 (sowie ggf. weiteren Verkehrsteilnehmern, falls sich diese im entsprechenden Empfangsbereich befinden) empfangen wird. Mittels eines Pfeils C ist in Figur 2 angedeutet, dass der zweite Verkehrsteilnehmer 22 zu einem wiederum späteren Zeitpunkt (nach t = 2*dt) eine zweite weitere Broadcast-Nachricht aussendet, welche vom dritten Verkehrsteilnehmer 23 (sowie ggf. weiteren Verkehrsteilnehmern, falls sich diese im entsprechenden Empfangsbereich befinden) empfangen wird. Da erfindungsgemäß jede der weiteren Broadcast-Nachrichten zumindest Teile des initialen Nachrichteninhalts umfasst, gelangen zumindest diese Teile des initialen Nachrichteninhalts nach einer gewissen Anzahl weiterer solcher Nachrichtenempfangs- und nachfolgender Nachrichtensendeereignisse analog zu einer Nachrichtenkette schlussendlich zum Empfänger 25, wobei die Ausbreitungsrichtung von zumindest Teilen des initialen Nachrichteninhalts (bzw. die Fortpflanzungsrichtung der Nachrichten) erfindungsgemäß insbesondere derart vorgesehen ist, dass diese entgegen der Fahrtrichtung 101' der Verkehrsteilnehmer gewählt ist.

Figur 2 zeigt jedoch lediglich eine bevorzugte Möglichkeit bzw. Ausführungsform auf, wie es gemäß der vorliegenden Erfindung möglich ist, dass zur Ermittlung der Fahrspurinformation bezüglich mehrerer Verkehrsteilnehmer 21, 22, 23, 24 auf einem Streckenabschnitt 101, welcher im Wesentlichen einem geographischen Gebiet 100 bzw. einem Teil eines geographischen Gebiets 100 (insbesondere einem Streckenabschnitt einer Fahrtrichtung) entspricht, jeweils eine Positionsinformation der momentanen Position der Verkehrsteilnehmer 21, 22, 23, 24 und eine Geschwindigkeitsinformation der Verkehrsteilnehmer 21, 22, 23, 24 sowie eine Fahrzeugtypinformation und/oder eine Fahrzeugkategorieinformation erfasst werden, wobei zur Ermittlung oder zur Zuordnung der Fahrspurinformation für die mehreren Verkehrsteilnehmer 21, 22, 23, 24 die nachfolgenden Schritte ausgeführt werden:

-- in einem ersten Schritt wird zu einem betrachteten Streckenabschnitt 101 die vorhandene Anzahl an Fahrspuren ermittelt oder von einer Datenbank abgerufen,

-- in einem nachfolgenden zweiten Schritt wird jedem der Verkehrsteilnehmer 21, 22, 23, 24 eine jeweilige Fahrspurinformation ermittelt oder zugeordnet. Insbesondere ist erfindungsgemäß vorgesehen, dass auch eine Fahrdauer der Verkehrsteilnehmer 21, 22, 23, 24 auf dem Streckenabschnitt 101 ermittelt wird, wobei hierzu insbesondere der Streckenabschnitt 101 in eine Mehrzahl von Unterabschnitten 102, 103, 104 eingeteilt wird.

In Figur 1 ist die Aufteilung eines Streckenabschnitts 101 im Detail dargestellt: Figur 1 zeigt hierbei eine schematische Situation einer Mehrzahl von Verkehrsteilnehmern, wobei auf einem Streckenabschnitt 101 zur Ermittlung der voraussichtlichen Fahrzeit bzw. Fahrdauer der Verkehrsteilnehmer eine Positionsinformation der momentanen Position der Verkehrsteilnehmer und eine Geschwindigkeitsinformation der Verkehrsteilnehmer erfasst werden. Von den in Figur 2 schematisch einzeln bezeichneten Verkehrsteilnehmern 21, 22, 23, 24 ist lediglich ein Verkehrsteilnehmer 24 in Figur 1 eigens bezeichnet. Für den Streckenabschnitt 101 ist in Figur 2 weiterhin schematisch gezeigt, wie dieser in eine Mehrzahl von Unterabschnitten eingeteilt ist, wobei zwischen dem Sender 20 und dem Empfänger 25 des Streckenabschnitts 101 bzw. des geographischen Gebiets 100 in Figur 1 ein erster Unterabschnitt 102, ein zweiter Unterabschnitt 103 und ein dritter Unterabschnitt 104 dargestellt sind, wobei der erste, zweite und dritte Unterabschnitt 102, 103, 104 gemäß der beispielhaften Darstellung in Figur 1 als in einer Abfolge entgegen der Fahrtrichtung 101' der Verkehrsteilnehmer auf dem betrachteten Streckenabschnitt angeordnet dargestellt sind.

Ferner sind in Figur 1 weitere Streckenabschnitte 110, 111, 112 dargestellt, welche in Fahrtrichtung (und aus der Perspektive des Verkehrsteilnehmers 24) hinter dem derzeitig befahrenen Streckenabschnitt 101 liegen bzw. angeordnet sind. Erfindungsgemäß ist es insbesondere vorgesehen, dass in einem ersten Teilschritt des zweiten Schritts jedem der Verkehrsteilnehmer 21, 22, 23, 24 eine jeweilige vorläufige Fahrspurinformation ermittelt oder zugeordnet wird, wobei in einem zweiten Teilschritt des zweiten Schritts geprüft wird, ob die vorläufige Fahrspurinformation anzupassen oder zu korrigieren ist, wobei, sofern die vorläufige Fahrspurinformation zu korrigieren ist, in einem dritten Teilschritt des zweiten Schritts auf der Basis der vorläufigen Fahrspurinformation eine korrigierte Fahrspurinformation für zumindest einen Teil der Verkehrsteilnehmer 21, 22, 23, 24 ermittelt oder zugeordnet wird, wobei in einem vierten Teilschritt des zweiten Schritts die korrigierte Fahrspurinformation als die Fahrspurinformation dem jeweiligen Verkehrsteilnehmer 21, 22, 23, 24 zugeordnet wird. Hierdurch ist es insbesondere vorteilhaft möglich, dass die Bestimmung der Fahrspurinformation bezüglich mehrerer sich auf einem Streckenabschnitt befindender Verkehrsteilnehmer (bzw. die Bestimmung eines Schätzwertes bzw. eines Vorhersagewertes für die Fahrspurinformation) genauer bzw. mit einer höheren Präzision bzw. Vorhersagegenauigkeit möglich ist.

Ferner ist es erfindungsgemäß ebenfalls bevorzugt, dass vor der Durchführung des vierten Teilschritts der zweite Teilschritt und der dritte Teilschritt wiederholt, insbesondere iterativ, durchgeführt wird, wobei geprüft wird, ob die korrigierte Fahrspurinformation erneut zu korrigieren ist und, falls ja, eine weitere korrigierte Fahrspurinformation für zumindest einen Teil der Verkehrsteilnehmer 21, 22, 23, 24 ermittelt oder zugeordnet wird.

Ferner ist es erfindungsgemäß ebenfalls bevorzugt, dass der erste und zweite Schritt zur Ermittlung oder zur Zuordnung einer Fahrspurinformation entweder durch den Verkehrsteilnehmer 21, 22, 23, 24 selbst (bzw. durch eine Berechnungseinrichtung desselben) oder aber durch eine extern zum Verkehrsteilnehmer 21, 22, 23, 24 existierende Einrichtung durchgeführt wird.

Insbesondere ist es erfindungsgemäß vorteilhaft möglich, dass die Durchführung des Verfahrens zur Ermittlung der Fahrspurinformation der Verkehrsteilnehmern auf dem Streckenabschnitt darauf beruht, dass zur Erfassung der jeweiligen Positionsinformation der momentanen Position der Verkehrsteilnehmer und zur Erfassung der jeweiligen Geschwindigkeitsinformation der Verkehrsteilnehmer (hinsichtlich eines (letztlich beliebigen) betrachteten Verkehrsteilnehmers) durch Übermitteln - innerhalb eines geographischen Gebiets 100 - eines Nachrichteninhalts vom stationären Sender 20 zum stationären Empfänger 25 über eine Mehrzahl von mobilen Verkehrsteilnehmer 21, 22, 23, 24 erfolgt. Hierbei sind sowohl der Sender 20 als auch die Mehrzahl der Verkehrsteilnehmer 21, 22, 23, 24 in der Lage Broadcast-Nachrichten mit dem Nachrichteninhalt zu senden und der stationäre Empfänger 25 ist in der Lage, Broadcast-Nachrichten zu empfangen, wobei der Nachrichteninhalt wenigstens einer Broadcast-Nachricht des Senders 20 an wenigstens einen der Mehrzahl von mobilen Verkehrsteilnehmern 21, 22, 23, 24 mittels der wenigstens einen Broadcast-Nachricht mittels einer PC5-Sidelink Funktionalität, insbesondere unter Nutzung der Mode-4-Funktionalität, gesendet wird, wobei zeitlich vor dem ersten Schritt die nachfolgenden Schritte erfolgen:

-- in einem dritten Schritt empfängt der betrachtete Verkehrsteilnehmer wenigstens eine Broadcast-Nachricht, wobei der Nachrichteninhalt der wenigstens einen Broadcast-Nachricht wenigstens

-- eine Nachrichtenidentifikationsinformation,
-- eine Gebietsinformation zur Definition des geographischen Gebiets (100)
-- eine Wiederholungsinformation und
-- eine Aggregationszeitinformation

umfasst,

-- in einem nachfolgenden vierten Schritt sendet der betrachtete Verkehrsteilnehmer wenigstens eine weitere Broadcast-Nachricht, wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:

-- eine Positionsinformation der momentanen Position des betrachteten Verkehrsteilnehmers,
-- eine Geschwindigkeitsinformation des betrachteten Verkehrsteilnehmers
-- eine momentane Zeitstempelinformation und
-- eine Zusatzinformation

umfasst.

Es ist somit durch das erfindungsgemäße Verfahren und gemäß einer solchen Ausführungsvariante möglich, Daten für aktuelle Verkehrsflüsse von Straßenabschnitten mittels einer Mehrzahl von Broadcast-Nachrichten-Ketten (zwischen dem Sender 20 und dem Empfänger 25 über mehrere Verkehrsteilnehmer 21, 22, 23, 24) insbesondere zur Erfassung von Positionsinformationen der momentanen Positionen der Verkehrsteilnehmer und von Geschwindigkeitsinformationen der Verkehrsteilnehmer zur Ermittlung der Fahrdauer der Verkehrsteilnehmer auf dem Streckenabschnitt 101 zu übermitteln, wobei es erfindungsgemäß insbesondere vorgesehen ist, die Ausbreitungsrichtung dieser Nachrichtenübermittlung (bzw. Broadcast-Ketten-Nachrichten) entgegen der erlaubten Verkehrsrichtung (bzw. entgegen der Verkehrsflussrichtung, Bezugszeichen 101' in Figur 1 bzw. 2) vorzusehen. Insbesondere ist es gemäß einer solchen Ausführungsvariante vorgesehen, dass der Sender 20 als ein autorisierter Sender (z.B. am Funkmast eines Netzbetreibers und am Ausgangspunkt des geographischen Gebiets, etwa eines Straßenabschnitts) periodisch eine initiale spezielle Broadcast-Nachricht aussendet, wobei der Nachrichteninhalt von dem Sender 20 an eine Mehrzahl von Empfängern (Verkehrsteilnehmer 21, 22, 23, 24) als Broadcast-Nachricht mittels einer D2D-Funktionalität, device-to-device-Funktionalität oder einer PC5-Sidelink Funktionalität, insbesondere unter Nutzung der Mode-4-Funktionalität, gesendet wird. Die Nachricht wird insbesondere nur von Fahrzeugen (Verkehrsteilnehmer bzw. Empfangsgeräte) auf dem Straßenabschnitt des geographischen Gebiets 100 (definiert in der initialen Broadcast Nachricht) sowie mit der vorgegebenen Fahrtrichtung 101' durch eigene Informationen (insbesondere Position, Geschwindigkeit, Zeitstempel und FZG Typ) angereichert und erneut als (auch von zukünftigen Empfängern anzureichernde) Broadcast Nachricht versendet, wodurch es mehrere Ketten von Broadcast Nachrichten geben kann (und in der Regel auch geben wird), die beim Erreichen des Endpunktes des Straßenabschnittes vom Empfänger 25 (bzw. vom finalen Empfänger), z.B. eine spezielle Empfangseinheit am Funkmast eines Netzbetreibers, empfangen werden und danach zu aktuellen Verkehrsflussinformationen des Straßenabschnitts verarbeitet werden.
Jeweils eine solche Kette von Broadcast-Nachrichten (welche über bzw. durch das geographische Gebiet 100 bis zum Empfänger 25 ‚laufen') wird somit durch eine initiale spezielle Broadcast-Nachricht ausgelöst bzw. begonnen, wobei solche initialen speziellen Broadcast-Nachricht vom Sender 20 erfindungsgemäß insbesondere periodisch (beispielsweise alle 100, 200, 300, 400, 500, 600, 700 oder 800 Sekunden oder auch alle 2, 3, 4, 5, 8, 10, 12, 15, 18, 20, 25 oder 30 Minuten) wiederholt werden (insbesondere unter Nutzung einer jeweils anderen, beispielsweise hochgezählten, Nachrichtenidentifikationsinformation).
Somit ist es erfindungsgemäß in vorteilhafter Weise möglich, dass mit einem solchen Verfahren die Ermittlung präziser FZG-Typ-spezifischer Fahrdauern aus Broadcast-Nachrichten-Ketten realisierbar ist. Dies ist im Gegensatz zu bisher bekannten Verkehrsinformationssystemen, welche typischerweise Verkehrsinformationen nutzen, die im Wesentlichen auf Zählungen von Fahrzeugen (FZGen) an Straßenquerschnitten oder auf der Erhebung von FZG-Daten (Position, Geschwindigkeit, Zeitpunkt) basieren. Solche bisher bekannten Methoden bzw. Verkehrsinformationssysteme haben die folgenden Probleme hinsichtlich der Zählung von Fahrzeugen (FZGen) an Straßenquerschnitten:

-- Datenerhebung nur an Zählstellen und nicht auf Strecken(abschnitten);
-- Aktualität vs. Qualität, d.h. entweder eine vergleichsweise geringe Aktualität (z.B. bei einer üblichen Zähldauer von beispielsweise einer Stunde) oder eine geringe verarbeitete Datenmenge und damit geringere Qualität der Ergebnisse (etwa bei einer geringeren Zähldauer als eine Stunde);
-- eine Verdichtung der Zählstellen ist sehr kostenaufwendig

sowie die folgenden Probleme hinsichtlich der Erhebung von FZG-Daten (Position, Geschwindigkeit, Zeitpunkt):

-- keine Anonymität bei Datenerhebung (Datenschutzproblematik), d.h. Tracking möglich;
-- Mobilfunk-Datenverbrauch

-- geringe Anzahl der teilnehmenden FZG (Teilnahme kann deaktiviert werden).

Demgegenüber ist es beim erfindungsgemäßen Verfahren zur Ermittlung der Verkehrsinformationen möglich, dass folgende Eigenschaften kombinierbar sind:

-- Aktualität der Daten
-- hohe Anzahl teilnehmender FZGe / Erfassungsstellen
-- ausreichend genaue Erfassung der Daten für Streckenabschnitte mit unterschiedlichen Verkehrsdaten (Geschwindigkeiten, Verkehrsdichte), z.B. Berücksichtigung von Baustellen oder Staus
-- preisgünstige Umsetzung
-- Anonymität der FZGe
-- kein oder lediglich minimaler Verbrauch von Mobilfunk-Datenvolumen. Erfindungsgemäß ist es vorgesehen insbesondere aus den Geschwindigkeitsmessungen unterschiedlicher FZGe realistische Fahrdauern für die FZGe zu ermitteln. Insbesondere die zuerst zu durchfahrenden Unterabschnitte einer Route, die Abschnitts-Fahrdauern beinhalten, werden mit der Erfindung plausibler ermittelt. Dadurch verbessern sich aber auch die Gesamtfahrdauern einer streckenmäßig langen Route.
Insbesondere wird erfindungsgemäß auch das Problem adressiert, dass unterschiedliche FZG-Typen je nach Verkehrssituation stark unterschiedliche Abschnitts-Fahrdauern haben und dass bei mehrspurigen Straßen die Bevorzugung der weiter linken Spuren tendenziell zu höheren Geschwindigkeiten und damit zu geringeren Abschnitts-Fahrdauern führt.

Insbesondere ist es erfindungsgemäß vorgesehen, dass das Verfahren eine Verkehrssystem-Infrastruktur kombiniert mit der Festlegung von Strecken(-Abschnitten) in für das Verfahren optimierter Weise (und einer dynamischen Anpassung), einer V2X-Kommunikation (nach 3GPP bzw. ETSI Standards) und einer Datenerhebung, Datenaggregation und Datenverarbeitung insbesondere mit Nutzung von Broadcast-Wellen.
Mit der Ausbreitung von e-Mobilität sowie semi-autonomem und autonomem Fahren wird die standardisierte V2X-Kommunikation (als Erweiterung von LTE- und 5G-Mobilfunk) innerhalb der Verkehrssysteme starke Verbreitung finden. Daher ist damit zu rechnen, dass zukünftig ein Großteil der am Verkehr teilnehmenden Verkehrsteilnehmer V2X-Kommunikation beherrschen und zur Ermittlung von Verkehrsflussdaten beitragen können.
Das in Figur 1 mit dem Bezugszeichen 120 bezeichnete V-Info-System ist das zentrale (Server-)System, in welchem alle V-Info des Verkehrssystems zusammenlaufen, aufgearbeitet und dann den Verkehrsteilnehmern zur Verfügung gestellt werden. Auch die Anpassung bzw. Justierung der Parameter werden vom V-Info-System 120 gesteuert. Die stationären Sender an den Verkehrsknotenpunkten bzw. Start- und Endpunkten der Streckenabschnitte, die sowohl die einzelnen Broadcast-Nachrichten-Ketten (Nachrichten-Wellen) initiieren als auch diese Nachrichten-Wellen empfangen, daraus die V-Info berechnen bzw. aufbereiten und dann an das V-Info-System senden.
Die Fahrzeuge (FZGe), die Teil des Verkehrssystems sind und damit die direkte (Sidelink) V2X-Kommunikation beherrschen, bereiten die empfangenden Broadcast-Nachrichten der Nachrichten-Wellen auf und senden diese weiter, sodass insbesondere nachfolgende FZGe und/oder ein stationärer Sender am Ende eines Straßenabschnitts aggregierte Informationen der FZGe vor ihm erhalten. Die Broadcast-Nachrichten-Wellen verlaufen entgegen der Fahrtrichtung der FZGe.
Grundsätzlich kann die Erfindungsmeldung / das Verfahren in drei Prozesse eingeteilt werden:

-- Die periodische Datenerhebung mittels Nachrichten-Wellen und Aufbereitung dieser Daten zu V-Info inklusive dynamischer Anpassung der Parameter für das Verkehrssystem in den stationären Empfängern an den Endpunkten von Straßenabschnitten.
-- Die individuelle Bestimmung und Berechnung der für ein FZG relevanten V-Info, insbesondere FD (Fahrdauer) und vm (Durchschnittsgeschwindigkeit), für eine bzw. alternative Routen zu einem Zielpunkt in jedem FZG auf einem Straßenabschnitt.
-- Den detaillierten Prozessverlauf für einen Streckenabschnitt, d.h. eine Nachrichten-Welle, wobei der stationäre Sender am Anfang des Streckenabschnitts die Broadcast-Nachrichten-Kette entgegen der Fahrrichtung initiiert, die FZGe auf dem entsprechenden Streckenabschnitt die empfangenden Broadcast-Nachrichten empfangen, aufbereiten und die aufbereiteten Nachtrichten dann weiter senden und schließlich der stationäre Sender am Ende des Streckenabschnitts die Nachrichten-Welle empfängt und aufbereitet und danach entweder an ein V-Info System sendet und/oder dieser finale Empfänger als initialer Sender des nächsten Straßenabschnitts fungiert und somit eine initiale Broadcast-Nachricht für diesen nächsten Abschnitt initiiert, die diese V-Info Information des Vorabschnitts (der Vorabschnitte) enthält und zugleich die Broadcast-Wellen Weg entlang des nächsten Abschnitts definiert.

Das V-Info-System managt

-- die V-Info, d.h. aggregiert die V-Info der einzelnen Nachrichten-Wellen und bereitet diese auf,

-- die Parameter für die Nachrichtenwellen und

-- das Streckennetz, d.h. die Streckenabschnitte und die Teilabschnitte.

Die aktuellen Werte sendet das V-Info-System periodisch an die stationären Sender. Die stationären Sender aktualisieren laufend die Parameter für den Streckenabschnitt, für den sie die Nachrichten-Wellen initiieren und senden in der Frequenz f die initialen Broadcast-Nachrichten der aktuellen Kette bzw. Welle.

Die FZGe im jeweiligen Streckenabschnitt leiten die Broadcast-Nachrichten angereichert weiter.

Der stationäre Sender am Ende des Streckenabschnitts empfängt die Nachrichten-Kette und bereitet daraus die aktuellen V-Info für den Streckenabschnitt auf.

Diese V-Info sendet der Sender dann an das V-Info-System (und/oder die Zusatzoption: der Sender fungiert als initialer Sender und sendet diese V-Info als Zusatzinformation in seiner initialen Broadcast-Nachricht für den nächsten Abschnitt; diese Option ist in der obigen Grafik aber nicht enthalten!).

Das V-Info-System empfängt die V-Info der finalen Sender, aggregiert die V-Info und aktualisiert bei Bedarf die Parameter und das Streckennetz.

Wenn ein FZG auf den Streckenabschnitt auffahren will, erhält es mit der Frequenz f eine Nachrichten-Welle für diesen Streckenabschnitt. Sollte das FZG auf ein Streckennetz auffahren, kann es die aktuell gültige (zuletzt durchgeführte) vollständige Nachrichten-Welle für jeden der zu befahrenden Streckenabschnitte beim V-Info-System abfragen oder einen stationären Sender (in der Nähe) der Auffahrstelle wird die V-Info an alle "auffahrenden" FZGe, z.B. per Broadcast-Nachricht, mit ausreichend hoher Frequenz anbieten.

Erfindungsgemäß wird insbesondere ein Set an (insbesondere mittels Broadcast-Nachrichtenketten erhobenen) Messgrößen definiert, mit denen die Spurbestimmung mittels einer schnellen Nachverarbeitung, basierend nur auf plausiblen Nachbarschaftsbeziehungen zwischen lokal benachbarten FZGen, erfolgen kann. Diese Nachverarbeitung kann in jedem FZG erfolgen.

Erfindungsgemäß ist ein solches Set an zu erhebenden Messgrößen beispielsweise wie folgt definiert:

-- GNSS Positionskoordinaten mit Standardabweichung der 2-D Lage, z.B. GNSS=GPS.

-- FZG-Typ Kennung ob LKW oder PKW.

-- Geschwindigkeit nur als Absolutwert und nicht die Fahrtrichtung.

-- PKW-Länge und -Breite werden nicht übertragen, da hierfür ausreichend genau für alle PKWs B=2 und L=5m angenommen werden.

-- LKW-Breite 2,5m.

-- Wenn FZG-Typ=LKW, dann muss auch der Abstand von der GNSS Sensorposition bis zum Rücklicht mit übertragen werden. Den Abstand nach vorne kann man bei LKW fix mit 1,5m annehmen.

-- Die GNSS Sensorposition wird im Diagonalen Schnittpunkt des PKWs oder des LKW-Fahrerhäuschens für alle angenommen.

-- Mess-Zeitpunkte brauchen nicht übertragen werden, da für Nachbarschafts-FZGe wegen der Broadcast-Aggregations-Methode alle Messgrößen zum ausreichend gleichen Zeitpunkt vorliegen.

-- Die Anzahl der Fahrbahn-Spuren muss vorliegen, z.B. aus einem Navigationssystem oder Internet-Abfrage mit GNSS Positionsinput.

-- Alle Spurbreiten werden fix angenommen zu z. B. 3,5m.

-- Nur die Positionskoordinaten müssen zusammen mit einem Genauigkeitsmaß vorliegen, alle anderen Inputdaten nicht, da sie in unserer Methode der Spurbestimmung untergeordnet relevant sind oder deren Fehlermaße bekanntterweise ausreichend klein sind.

Erfindungsgemäß können auch noch weitere Daten erhoben werden; dann wird die Spurbestimmung in der Regel noch genauer erfolgen können. Erfindungsgemäß ist es insbesondere ausreichend, wenn in mindestens 95% der Fälle die richtige Spur eines Fahrzeugs bestimmt wird; eine solche Genauigkeit ist ausreichend für eine spätere Weiterverarbeitung dieser Information zu spurspezifischen Verkehrsinformationen. Erfindungsgemäß wird insbesondere nicht von extrem hohen Positionsgenauigkeiten der einzelnen FZG Positionen ausgegangen, da das erfindungsgemäße Verfahren insbesondere auf der Grundlage von aktuellen GPS (oder andere globale Satellitennavigationssysteme) Positionsgenauigkeiten (von bestenfalls 5m aber im Mittel eher von 10m) ausgeht und da es absehbar ist, dass auch in naher Zukunft nicht alle FZGe bessere Lokalisierungssensoren/-Methoden aufweisen werden.

Erfindungsgemäß werden insbesondere möglichst wenig Daten erhoben und möglichst wenig Daten versendet. Dies wird dadurch möglich, dass von einem FZG keine fortwährenden Positionen bestimmt oder als Positionskette in der Broadcast-Ketten-Nachricht versandt werden, sondern im Wesentlichen die Information zu einem einzigen Zeitpunkt verwendet wird. In einer Ausführungsvariante benötigt das erfindungsgemäße Verfahren nicht die genauen Informationen der Fahrspurbegrenzungen, sondern nur die Information wie viele Spuren sich an dieser Stelle auf der Straße befinden;

es werden dann plausible Annahmen auf welcher Spur sich ein FZG befindet verwendet, wenn sich bspw. rechts neben einem Fahrzeug kein weitere FZG befindet, nämlich auf der rechten langsameren Spur, es sei denn das betrachtete FZG ist ein PKW und diese Spur ist nur für LKWs zugelassen. Weitere logische plausible Annahmen auch in Abhängigkeit der aktuellen Geschwindigkeiten sind ebenfalls möglich. Somit werden im Wesentlichen Nachbarschaftsverhältnisse der FZGe zueinander verwendet und zumindest gemäß einer bevorzugten Ausführungsvariante nicht die Lage der Fahrbahnen. Um die Nachbarschaftsinformationen richtig bewerten zu können, ist es erfindungsgemäß insbesondere vorgesehen, die Genauigkeiten der Inputdaten zu erfassen, da diese auch wesentlich unterschiedlich sein können, da ein FZG sich mit 1m und ein Nachbar-FZG sich mit 5m oder 15m Genauigkeit lokalisieren könnte und dieses zu anderen Ergebnissen in der Spurbestimmung führen kann, als wenn beide sich mit 1m Genauigkeit lokalisieren könnten. Da die Spur-Entscheidungen möglichst plausibel gefällt werden sollen, werden insbesondere auch die Ausmaße eines FZGs relativ zur Position der Lokalisierungseinheit im FZG benötigt. Andere Plausibilitätsannahmen, die ohne Standardabweichungen der Inputgrößen auskommen, sind die Annahme der Unfallfreiheit und Gefahrenfreiheit in Vergangenheit und naher Zukunft oder ein FZG im Zweifelsfall eher eine Spur weiter rechts zu positionieren.

Herkömmlicherweise bekannte Verkehrsinformationssysteme nutzen Verkehrsinformationen basierend im Wesentlichen auf Zählungen von Fahrzeugen (FZGen); jedoch fehlen oft die Informationen, auf welchen Fahrspuren sich die FZGe befinden und wie unterschiedlich die Verkehrsflüsse auf den unterschiedlichen Spuren sind. Sofern diese Spur-spezifischen Informationen vorliegen, liegen sie in der Regel nur punktuell an der Messstelle (i.d.R. kamerabasierte Erfassung mittels Infrarotmessung unterhalb der Kameraanbringung) vor und bisher liegen diese Messstellen nicht an vielen Punkten einer Strecke vor. Eine somit unter diesen Einschränkungen ermittelte mittlere Durchflussgeschwindigkeit aller FZGe bzgl. eines längeren Straßenabschnittes liefert dann bei weitestgehend freier oder wesentlich schneller befahrbarer linker Überholspur auf einem mehrspurigen Streckenabschnitt für ein potenziell schnelles FZG grob falsche, weil zu geringe mögliche Geschwindigkeiten. Entsprechend kann dann auch ein FZG, z.B. ein LKW, der auf der rechten Spur fahren wird/muss, potenziell zu hohe Geschwindigkeiten prognostiziert bekommen.

Somit gilt, dass bei herkömmlicherweise bekannten Systemen, insbesondere aufgrund nicht ausreichend guter (oder oft ganz fehlender) Bestimmung einer Fahrspur auf einer mehrspurigen Straße, die bisher erhobenen und weiterverarbeiteten Verkehrsinformationen nicht das liefern, was durch die Information suggeriert wird, nämlich die eine geeignete (bestmögliche) Information für individuelle Verkehrsteilnehmer. Je weniger eine aktuelle Verkehrssituation den Verkehrsfluss für schnellere FZGe behindert, desto weniger stark wirkt sich eine solche Unschärfe der Verkehrsflussinformation aber aus, da in einem Weiterverarbeitungsschritt im FZG, z.B. zur Routenberechnung, dann zusätzliche Informationen wie maximale eigene Geschwindigkeit, übliche ungehinderte Reisegeschwindigkeit, Richtgeschwindigkeit und Geschwindigkeitsbeschränkungen dem individuellen Nutzer eine Korrekturmöglichkeit bieten.

Erfindungsgemäß ist es somit vorgesehen, dass zusätzliche FZG-spezifische Basisdaten erhoben/genutzt werden und/oder die Basisdaten mittels Nachbarschaftsbeziehungen geprüft/korrigiert werden, so dass insbesondere die Spurbestimmung auf mehrspurigen Straßen bestmöglich ermittelt wird, so dass eine bessere Qualität der Verkehrsflussinformationen ermöglicht wird. Diese Qualität beinhaltet erfindungsgemäß insbesondere zwei Aspekte: einerseits die bessere Differenzierung nach potenziellem Nutzer und dessen möglicher/angestrebter Reisegeschwindigkeit und andererseits der umfangreicheren Datenerhebung und besseren Datenbereinigung der erhobenen Daten.

Die Kernaspekte der vorliegenden Erfindung werden nachfolgend nochmals erläutert. Insbesondere werden, basierend auf zusätzlichen FZG-Basisdaten, Informationen zur Erkennung und Auflösung/Behebung von Konflikten bzgl. der Spurfestlegung der FZGe generiert. Hierzu werden erfindungsgemäß insbesondere weitere FZG-Basisdaten benötigt, die es ermöglichen die Nachbarschaftsbeziehungen von FZGen zu analysieren und zu bewerten, um Spur-Konflikte verursacht durch Datenfehler zu beheben, die insbesondere aufgrund der GNSS Ungenauigkeit vorkommen und sich häufig in fehlerhaften Fahrspur-Bestimmungen auswirken würden, wenn nicht das Verfahren gemäß der vorliegenden Erfindung diese Fehler korrigieren würde.

Diese zusätzlichen FZG-Basisdaten sind insbesondere:

-- die geometrischen Größen (Ausdehnung eine FZGs in Längsrichtung und ggf. in Querrichtung relativ zur Lage des GNSS Receivers im FZG),
-- die geometrische Lage der Spuren (Position und Breite je Spur), sofern die FZG Positionsgenauigkeit sehr hoch ist,
-- die statistischen Genauigkeiten dieser zusätzlichen Basisdaten sowie

die statistischen Genauigkeiten der Basisdaten Position und ggf. Geschwindigkeit. Ein FZG kann insbesondere auch seine aktuelle Routen- oder Teilrouten-Information übertragen oder eine eindeutig ID für die von ihm detektierte Spur übertragen.

Es wird hier angenommen, dass die Messungen des Zeitpunktes und der Geschwindigkeit einen untergeordneten Fehler haben und deswegen nicht berücksichtigt werden müssen. Sollte dieses nicht der Fall sein, so können diese Genauigkeiten auch in den Broadcast Nachrichten übertragen werden und wie die Genauigkeit der Positionsbestimmung verwertet werden. Zeitfehler, Zeitunterscheide und Geschwindigkeitsfehler wirken sich als eine größere Positionierungsungenauigkeit eines einzelnen FZGs oder dem Abstand zwischen zwei FZGen aus. Wenn im Folgenden die Positionierungenauigkeit genutzt wird, so kann dies auch so interpretiert werden, dass darin z.B. unter anderem auch die Genauigkeitsanteile für die Zeitmessung mit enthalten sind. Da der Nachrichtenaustausch zwischen zwei Nachbar-FZGen aber extrem schnell erfolgt und die Basisdaten kurz vor der Versendung erhoben worden sind, spielen die Zeitmarken bei der Bewertung von Nachbarschaftsbeziehungen keine Rolle. Das gleiche gilt für die maximal möglichen Geschwindigkeiten; sie spielen keine Rolle. Es verbleibt die Nutzung von (Position, Geschwindigkeit, FZG-Typ).

Insbesondere mit Hilfe der Kenntnis der statistischen Genauigkeitsmaße der FZG-Basisdaten können die allermeisten Fahrspurkonflikte erkannt werden und auch im Rahmen der Genauigkeitsmaße mit Hilfe von logischen Nachbarschaftsbeziehungen plausibel behoben werden. Die aktuellen FZG-Geschwindigkeiten liefern nicht nur eine Erkennung eines Konfliktes, sondern in vielen Fällen erst die richtige logische Behebung des Konfliktes. Die Behebung durch Hinzuziehen der Geschwindigkeiten wird sehr oft eine bessere Behebung liefern, als wenn nur auf Basis von Positionen und Ausmaßen von FZGen entschieden werden würde. Dieses liegt auch an den aktuellen Genauigkeiten der Geschwindigkeits- und Positionsmessung. Die FZG-Geschwindigkeiten spielen also eine sehr wichtige Rolle.

Die Genauigkeiten der FZG-Geschwindigkeiten sind nur dann von Interesse, wenn ihr Fehler ausreichend groß im Verhältnis zu den Positionierfehlern von zwei benachbarten FZGen ist. Dieses wird aber nicht der Fall sein, da FZG Geschwindigkeiten immer mit kleiner als 3km/h bestimmt werden können und dann die Differenz statistisch gesehen ca. 1,4*3km/h, also ca. 4km/h, betragen wird und diese 4 km/h als Fehler des Geschwindigkeitsunterschiedes zwischen zwei Nachbar-FZGen eine stark untergeordnete Rolle spielt.

Der Zeitunterschiedsfehler von zwei Nachbar-FZGen kann - wie gesagt - vernachlässigt werden, da selbst wenn deren Uhren oder Zeitabgriff sehr schlecht aufeinander abgestimmt wäre, die auswertende Einheit erkennt, dass benachbarte FZGe ihre Daten ganz sicher innerhalb von Millisekunden zeitgleich erhoben haben, was durch die räumliche Nähe der FZGe und der Ausbreitungsgeschwindigkeit der Broadcast-Nachrichten-Ketten belegt ist.

Wie sich eine Fehlerfortpflanzung von additiven normalverteilten Komponenten wie Position und Streckenabstand zur Position gestaltet, ist bekannt (Fehlerfortpflanzungsgesetz mit c= (a*a + b*b)^0,5 mit a, b und c den Gauss-schen Fehlern von Position, Strecke und resultierender Off-set-Position. Da der z.B. GNSS Positionierfehler, a, i.d.R. wesentlich größer als der Fehler der Abmessungen eines FZGs ist (b), kann b vernachlässigt werden und c=a gesetzt werden, wobei es eine Komponente von a in Fahrtrichtung (nachfolgend auch als a1 bezeichnet) und eine Komponente von a quer zur Fahrtrichtung (nachfolgend auch als a2 bezeichnet) gibt. Der vorderste Punkt eines FZGs als auch der hinterste Punkt eines FZGs werden also beide eine Genauigkeit von a1 haben und die Seitenpunkte werden eine Genauigkeit a2 haben.

Wird der Abstand (die Strecke) zwischen 2 Punkten zweier FZGe mit AB bezeichnet, so ist die statistische Genauigkeit des Abstandes mit ebenfalls der Fehlerfortpflanzung nach Gauss berechenbar zu:

$$\text{Gauss Fehler von AB} = (\text{Summe der quadratischen Gauss Fehler})^{0,5}$$

in Anfangs- und Endpunkt der Strecke AB. Mit dem "Gauss Fehler AB Strecke" können Abstände zwischen A und B statistisch mit Hypothesen Tests bewertet werden. Das Bewertungstestmaß ist dann der Quotient (Gauss Fehler AB / AB) wobei der Zähler "Gauss Fehler AB" nicht von der Streckenlänge AB abhängig ist, sondern nur von den 2 Positionsbestimmungen. Sind diese gleich genau, so ist der Streckenfehler ca. das 1,4 fache des Positionsfehlers.

Mit der Methode der Fehlerfortpflanzung können Positionen von einzelnen FZGen (Einzelbewertung) bewertet werden, wie plausibel es ist, dass sie sich auf einer speziellen Fahrspur befinden. Hier wird die Strecke AB bewertet, wobei A die Position des FZGs und B die Position der Spurbahnmitte der nahegelegensten Fahrspur an dieser Stelle ist. Das Bewertungstestmaß ist dann der Quotient (Gauss Fehler AB / AB). Es wird davon ausgegangen, dass die Kenntnis der Spurmittenposition aktuell im Mittel mit einem Gaussfehler von 2 bis 5m bekannt ist.

Diese Einzelbewertung eines FZGs bzgl. seiner genutzten Fahrspur - nur aufgrund seiner Position und Positioniergenauigkeit - wird insbesondere dann benötigt, wenn das FZG an einem Spur-Konfliktfall (beide auf der gleichen Spur, was jedoch als statistisch extrem unwahrscheinlich anzusehen ist; siehe unten) bzgl. zweier FZGe beteiligt ist und es zu entscheiden gilt, welches der FZGe auf eine andere Spur zu setzen ist, nämlich das FZG, dass den ungünstigsten Quotienten hat. Das FZG mit dem größeren Quotienten ist in der Spur zu versetzen.

Diese Einzelbewertung eines FZGs bzgl. seiner genutzten Fahrspur - nur aufgrund seiner Position und Positioniergenauigkeit - ist auch dann hilfreich, wenn sich kein anderes FZG in der Nähe befindet (der Abstand ist sinnvoll zu definieren und dann abzufragen) und ein FZG sich z.B. nahezu auf der Begrenzungslinie zwischen 2 Spuren befindet, denn dann wird das FZG auf die rechte der zwei Spuren versetzt.

Dieses sind nur erste Beispiele um Konflikte oder Uneindeutigkeiten zu lösen.

Im Hinblick auf Geschwindigkeitsunterschiede zwischen zwei Nachbarfahrzeugen sind die Beschleunigungen und Bremswege von FZGen von Interesse, also abgeleitete Größen.

Mit der Methode der Fehlerfortpflanzung können auch Bremswege oder potenzielle Auffahrgefahren statistisch bewertet werden, indem die aktuellen Abstände AB zusammen mit den unterschiedlichen Geschwindigkeiten bewertet werden, ob sofern man den Positionen beider FZG auf der gleichen Spur glauben würde, die FZGe dann aber einen Konflikt in ihrer weiteren Fortbewegung verursachen würden oder bereits verursacht haben.

Es kann also herausgefunden werden, ob ein FZG B, das nur knapp hinter einem anderen FZG A fährt, aber eine viel höhere Geschwindigkeit hat, noch ausreichend Zeit zum Bremsen hat, damit es keine Kollision gibt. Kommt bei der Bewertung heraus, dass es einen Auffahrunfall von B auf A geben wird, dann ist ein FZG vom Prüfalgorithmus auf eine andere Spur zu versetzen. Als wahrscheinlichster Fall gilt dann, dass das hintere FZG eine Spur weiter nach links zu setzen ist. Ist dort keine weitere Spur, so ist das vordere FZG auf die nächste Spur nach rechts zu setzen. Wenn auf der Spur weiter rechts sich auch ein FZG C im Konflikt zu dem zu versetzenden FZG A befindet, so kann nun für diese zwei FZGe A und C die gleiche Prüfung erfolgen wie für A und B vorher. Rein theoretisch kann es aber hierbei nun einen Konflikt für die drei FZGe A, B und C geben, z.B. dann, wenn es an dieser Stelle es nur 2 Spuren und keine 3 Spuren gibt und z.B. im Extremfall alle 3 Positionen sich auf der gleichen Spur an nahezu der gleichen geographischen Position befinden. Dann könnte dieser Konflikt so behoben werden, dass angenommen wird, dass das schnellste FZG B sich nicht positionsmäßig hinter einem anderen FZG A befindet und auch nicht auf der gleichen Spur wie C befindet. Auch könnte geschlossen worden sein, dass A und C sich auf unterschiedlichen Spuren nebeneinander befinden. Dann wird B sich vermutlich ausreichend weit vor beiden auf der linken Spur befinden.

Ist jedoch umgekehrt die Geschwindigkeit von FZG B oben (d.h. des vorne fahrenden FZGs) wesentlich höher als die von A und von C, und der Abstand von B zu A und auch zu C sehr gering, so müsste B vorher durch A oder C hindurch gefahren sein, was nicht realistisch ist. Also ist das plausibelste, dass B sich alleine an seiner aktuellen Position auf der linken Spur befindet und A und C sich beide hintereinander auf der rechten Spur befinden. Ob sich A vor C befindet, wird durch die Bewertung ihrer z.B. GNSS Positionen und ihrer Geschwindigkeiten bewertet, entsprechend wie bereits oben beschreiben. Hierbei fließen auch die statistischen Genauigkeiten ein, siehe oben.

Für die Bewertung von möglichen Beschleunigungen können ähnliche Fälle konstruiert werden, z.B. wenn zu entscheiden ist, ob ein FZG durch eine Beschleunigung an eine bestimmte Position hätte kommen können, die Teil eines aufgelösten Fahrspur-Konfliktes von mehreren FZGen ist.

Weiter unten werden einige Grundsituationen für Spurkonflikte und deren Behebung beschrieben.

Eine Behebung der Spur-Konflikte sollte immer durchgeführt werden, da es die Genauigkeit von Zielgrößen wie spurspezifische und/oder FZG-Typ-spezifische und/oder Fahrer-Typ-spezifische Verkehrsflussinformation für Straßenabschnitte als davon abhängige Größen erhöht. Je intensiver der Verkehr ist und je ungenauer die Basisdaten sein werden, umso mehr Spurkonflikte werden auftreten, und wenn diese unbereinigt verbleiben, dann die Zielgröße verschlechtern.

Eine grobe Abschätzung über die Häufigkeiten von Spurkonflikten hängt im Wesentlichen von der FZG Dichte auf Abschnitt ab und auch den Genauigkeiten der FZG-Basisdaten. Je höher die FZG Dichte und je ungenauer die FZG-Basisdaten sind umso mehr Konflikte wird es geben. Somit können Spurkonflikte durch solch Nachbarschaftsinformationen/-beziehungen in der Regel behoben werden, indem Plausibilitätsregeln aufgestellt und angewendet werden, entsprechend der Vorgehensweise im Beispiel oben mit den FZGen A, B und C, wobei die logischste Grundannahme dabei in der Regel ist, dass es zu keinem Unfall gekommen ist. Diese Grundsituationen können aber auch unter Beteiligung mehrerer FZGe und auf mehr Spuren als in den Beispielen vorliegen. Und unterschiedliche Grundsituationen können miteinander zugleich in einem größeren "Multi-Konflikt" vorliegen, wobei sozusagen "alles mit allem" zu berücksichtigen ist. Alle diese Konflikte sind aber in aller Regel durch logische Regeln auflösbar. Dieses kann über sukzessive Variation der Anwendung von logischen Regeln und der Bewertung des Ergebnisses anhand von "Plausibilität in der Realität" erfolgen. Verschiedene iterative Durchläufe können nachträglich miteinander verglichen werden und auf Basis von vordefinierten Kriterien wird dann die realistischste Lösung genutzt, um mögliche weitere Zielgrößen darauf basierend zu ermitteln. Hierzu kann a priori auch eine Rangfolge der anzuwendenden Regeln aufgestellt werden, um einen möglichen Iterationsprozess einzuschränken und damit zu beschleunigen. Selbst wenn in diesem Prozess der Spurkonfliktbehebung nicht alle Fahrspur-Konflikte der wahren Realität entsprechend behoben werden, so wird das Verfahren i.d.R. nahezu immer eine Verbesserung der Basisinformation Spurbestimmung liefern.

Für Deutschland gelten beispielhaft aktuell die folgenden ungefähren Annahmen:

PKW-Länge = 4 bis 6m

LKW-Länge bis 18m inkl. Anhänger

PKW-Breite = 1,8 bis 2,1m

LKW-Breite = bis 2,6m

BAB Spurbreite = 2,5 bis 4m

GNSS Positions-Genauigkeit = 5 bis 8m (68%)

Genauigkeit der Spurmitte- oder Spurbegrenzungs-Position = 3 bis 7m (68%)

Genauigkeit der Spurbreite = 0,5 bis 1m (68%)

Genauigkeit der Geschwindigkeit = 3 km/h (68%) bei Geschwindigkeiten >30 km/h

Min. Bremsweglänge als quadratische Funktion der Geschwindigkeit = Weg =

$(v[km/h]/10)^2$ [m] bei v=120km/h auf v=0 sind also 144m um zum Stillstand zu kommen.

Min. Bremsweglänge um von v2 auf v1 abzubremsen = Weg = F(v1, v2, FZG-spezifische Parameter)

Erfindungsgemäß ist es somit möglich, eine eigene Spurbestimmung der FZGe auf einem Streckenabschnitt (AB) durch entweder ein FZG selbst oder durch einen finalen Empfänger durchzuführen, um später mit anderen Methoden basierend auf diesen FZG Fahrspurbestimmungen für FZG-Typ und/oder Fahrspur relevante individuelle und/oder kombinationstypische Verkehrsinformationen (V-Info-Typ-Spur) ableiten zu können. Hierbei gilt insbesondere: Datenerhebung in jedem FZG auf z.B. AB; Datenaggregation mit Broadcast-Ketten-Nachrichten Methode und deren Vorteilen; wegen den zu erwartenden Genauigkeitsgrenzen bei späterer V-Info-Typ-Spur Herleitungen werden für die Spurbestimmungen nur die notwendigen minimalen Inputdaten berücksichtigt; durch die hohen FZG Erfassungsraten nahe 100% der Broadcast Aggregationstechnik und den zu erwartenden Genauigkeitsgrenzen bei späteren V-Info-Typ-Spur Herleitungen können falsche Spurbestimmungen von ca. 5% toleriert werden.

Für eine Version des Verfahrens mit minimalen Annahmen und minimalen Input Daten gilt:

-- Beide FZGe (FZG1 und FZG2 oder kurz 1 und 2) haben gleiche bekannte Ausmaße (L,B) und gleiche GNSS Sensor Positions-Definition im FZG;
-- Die GNSS Fehlerellipse sei ein Kreis um die Position Xi des FZGi und die Genauigkeit von Xi, SigmaXi, sei z.B. als Standardabweichung (ca. 68%), gegeben.
-- Die Zeitpunkte der Angabe zu FZG1 und FZG2 liegen alle ausreichend genau zum gleichen Zeitpunkt vor, damit die Positionen der FZGe vergleichbar sind.

Sofern die Zeitpunkte ti zu unterschiedlich wären, könnten die Positionen Xi mit dti=t0-ti und vi alle auf den gleichen Zeitpunkt t0 korrigiert werden, wobei das t0 der Messzeitpunkt eines der FZG im lokalen Bereich wäre, z.B. X2_korrigiert_Zeit= v2*(t1-t2) sofern t0=t1 gewählt würde.
Die Korrektur Xi_korrigiert_Zeit=vi*(t0-ti) kann berechnet werden, sofern die Zeitpunkte ti bekannt sind (z.B. in der Broadcast-Nachricht übertragen werden).

-- Beide FZGe bewegen sich in die gleiche Richtung entlang der Autobahn (AB) oder Straße, was bei höheren v>30 km/h immer gilt.
-- Beide Geschwindigkeiten v1 und v2 sind gegeben (absolut in km/h und die Fahrtrichtung wird immer parallel zur Spurlängsachse angenommen).

Bei v>30km/h gilt ausreichend genau, dass die Geschwindigkeitsrichtung identisch mit der Längsachse des FZGs und mit der Fahrbahnrichtung ist.

-- Ein jeweils lokales Koordinatensystem K mit den zueinander senkrechten Achsrichtungen g und l hat die g-Achse senkrecht zur Längsrichtung der AB orientiert.
-- Der Ursprung von Koordinatensystem K ist beliebig, da die Achsrichtungen von K nur zur Definition der Korrekturen (g+,g-,l+,l-) der GNSS Positionen Xi von FZGi benötigt werden.
-- Die positionsmäßige Lage der Spuren der Fahrbahn sei nicht bekannt.
-- Die Anzahl der Spuren der Fahrbahn sei bekannt, die Spurbreite B einer Spur-ID (B oder Spur-ID-B) sei nicht bekannt.
-- Unbekannte Größen wie das Ausmaß eines FZGs oder eine Spurbreite oder plausible FZG Abstände in Längs- und Querrichtung werden als plausibelste Mittelwerte a priori abgeschätzt.
-- Plausibilitätsentscheidungen:
Die Positionen u. Spurzuordnungen werden nur bei Bedarf und nur plausibel korrigiert werden, so dass die Vergangenheit möglich war und auch in naher Zukunft kein Unfall (FZG Überlappung) oder keine große Gefahrensituation (z.B. durch zu enges Einscheren) entstehen wird.
Berücksichtigt werden in dieser Version des Verfahrens mit minimalen Annahmen die FZG Positionen und deren Genauigkeiten, absolute Geschwindigkeiten (d.h. ohne Richtungsmessung) und Ausmaße von FZGen sowie die Anzahl der Spuren.

Generischer Algorithmus des Verfahrens:

Wesentlicher Lösungs-Schritt 0: FZG1 zu FZG2 in nur einer 1:1 Beziehung:

-- Bestimme die plausibelste relative Spurzuordnung (d.h. beide auf derselben Spur oder auf verschiedenen Spuren).
-- Falls beide FZGe auf verschiedenen Spuren sind, bestimme auch welches FZG bzgl. Fahrtrichtung links von dem anderen ist, z.B. FZG1=Links und FZG2=Rechts.

-- Falls beide FZGe auf identischer Spur sind, bestimme deren Reihenfolge bzgl. Fahrtrichtung auf der Spur, z.B. FZG1=Vorne und FZG2=Hinten.

-- Bestimme die plausibelsten relativen Positionskorrekturen für beide FZGe im System K und bringe sie an den GNSS Positionen an, z.B. FZG1 mit Positions-Korrekturen g- und I++, d.h. bzgl. Fahrtrichtung etwas nach links und etwas mehr nach hinten korrigiert. Die Korrekturen sind Funktionen von (v1-v2),

Wesentlicher Lösungs-Schritt 1: FZG1 nacheinander zu FZG2, FZG3, .... in relevanter lokaler FZG1 Umgebung (z.B. 99% mit 3*SigmaX1) als sukzessiv ermittelt 1:N Beziehung

-- Nutzung von Schritt 0 als 1:1 Korrektur.

-- Mit algorithmischem Rücksprung zu ersten 1:1 Bewertungen und Prüfungen, ob ein Folgeschritt FZG1 zu FZG(i+1) die vorherigen zu (i-1) Schritte FZG1 zu FZG2 bis FZG1 zu FZGi unplausibel beeinflusst hat. Bei aufgedeckten Unplausibilitäten erneute Positions- und Spurkorrekturen bis alles plausibel ist.

Äußere Schleife um Schritt 1 mit unterschiedlichen FZG-Typ Kombinationen (dazu muss der FZG-Typ, z.B. PKW oder LKW, in der Broadcast msg enthalten sein). 3 Schleifendurchläufe: Erster Schleifendurchlauf mit jeder LKW zu seinen Nachbar-LKW mit möglichen Positionskorrekturen aller LKW, zweiter Schleifendurchlauf jeder PKW zu positionsfixierten (aus erstem Schleifendurchlauf) Nachbar-LKWs liefert Positionskorrekturen der PKW und zum Schluss Schleifendurchlauf alle PKW zu allen Nachbar-PKW untereinander liefern potenziell zusätzliche Positionskorrekturen aller PKW.

Der dritte Schleifendurchlauf kann bei den PKW nochmals weitere Verbesserungen Xi_korrigiert_Nachbarschaft an den bisherigen Xi verursachen, somit Xi:=Xi+Xi_korrigiert_Nachbarschaft, die aus der Anzahl der Spuren folgen.

Finale Schleife

Bestimme final die plausibelste absolute Spur-ID (Spurlage) aller FZGe, nachdem die Spuranzahl bekannt ist und alle FZGe im lokalen Bereich zueinander analysiert sind.

-- Schritt A: Die äußere Schleife von Schritt 1 im ersten Durchlauf liefert für LKWs die Spurrelationen zueinander, wobei bei 2-Spurlösungen für 2 LKWs der rechte LKW immer auf die ganz rechte Spur einer Fahrbahn positioniert wird, z.B. als Spur-ID=1 bezeichnet. Die jeweils linkere Spur bekommt dann die Spur-ID um 1 erhöht.

-- Folge-Schritt B: Die nach der äußeren Schleife und Schlussdurchlauf mit nur PKW zu PKW für alle FZGe, PKW der LKW, vorliegenden Positionen und relativen Spurangaben können jetzt zum Schluss in absolute Spurangaben umgewandelt werden, da die Anzahl der Spuren lokal bekannt ist.

Sonderfälle (v klein ist zwingend notwendig)

-- v=0 oder v sehr klein mit der Annahme Spur=Standspur oder Parkbucht.

-- Berücksichtigung von StVO Angaben auf FZG-Navigationssystem insb. bzgl. LKW-Fahrbahn oder spurspezifische v-Begrenzung.

-- Kenntnis von Zusatzdaten wie LKW-Länge oder unterschiedliche GNSS Sigmas in g und I-Richtung oder genauere Lage des GNSS Sensors bzgl. FZG.

-- Berücksichtigung von angenommenen Standardabweichungen weiterer Größen z.B. L, B, ...

Mögliche Abbruchkriterien für den Algorithmus sollen hier nur beispielhaft dargestellt werden. Möglich ist erfindungsgemäß ein gewichtetes Kriterium aus mehreren Teilkriterien für ein gegebenes kürzeres Gebiet einer längeren Strecke. Die Teilkriterien für jedes kürzere Gebiet wären z.B.:

-- K1: Die Anzahl an FZGen auf der rechten Spur.

-- K2: Mit geringerem Gewicht als K1: die Anzahl der FZGe auf den beiden rechten Spuren, wenn es noch eine dritte linke Spur gibt.

-- K3: Die kleinste Summe an gewichteten Koordinaten-Korrekturen der FZGe des Gebietes mit:

$$\text{Summe} = \text{Summe aller } dxi/sigmaXi$$

Worin dxi die 2-D Korrektur der 2-D Position Xi des FZGi ist und sigmaXi die Standardabweichung der noch unkorrigierten Lage von Xi ist und i von 1 bis N geht. Bemerkung: Die Gewichtung erfolgt über die Standardabweichung SigmaXi aus der Broadcast-Nachricht. Je größer das SigmaXi war, desto geringer wird der Einfluss des Quotienten dxi/SigmaXi auf die Summe gebildet aus allen Quotienten. Die Koordinaten-Korrekturen setzen sich aber nur aus den Korrekturen Xi_korrigiert_Nachbarschaft der verschiedenen Korrekturschritte 1 bis 3 zusammen, und nicht aus den Korrekturen Xi_korrigiert_Zeit.

Das Gesamtkriterium GK wäre dann GK=F(K1, K2, K3,...), wobei die Funktion F je nach Ki Definition gewählt würde.

Die verschiedenen Lösungen für eine Anzahl von FZGen (also deren Positionskorrekturen und Spurfestlegungen) würden dann bzgl. ihres GK Wertes verglichen werden und der beste GK Wert repräsentiert dann die beste (plausibelste) Lösung. Ob zusätzliche Lösungen über Variationen zu suchen sind kann durch einen vorgegebenen Schwellwert, GK_Schwellwert, entschieden werden oder durch die vorgegebene Anzahl an Variationen entschieden werden.

**Patentansprüche**

1. Verfahren zur Ermittlung oder zur Zuordnung einer Fahrspurinformation bezüglich mehrerer sich auf einem Streckenabschnitt (101) befindender Verkehrsteilnehmer (21, 22, 23, 24), wobei zur Ermittlung oder zur Zuordnung der Fahrspurinformation bezüglich der Verkehrsteilnehmer (21, 22, 23, 24) die Erfassung

    -- einer Positionsinformation der momentanen Position der Verkehrsteilnehmer (21, 22, 23, 24),
    -- einer Geschwindigkeitsinformation der Verkehrsteilnehmer (21, 22, 23, 24) und
    -- einer Fahrzeugtypinformation und/oder einer Fahrzeugkategorieinformation erfolgt,

    wobei zur Ermittlung oder zur Zuordnung der Fahrspurinformation für die mehreren Verkehrsteilnehmer (21, 22, 23, 24) die nachfolgenden Schritte ausgeführt werden:

    -- in einem ersten Schritt wird zu einem betrachteten Streckenabschnitt (101) die vorhandene Anzahl an Fahrspuren ermittelt oder von einer Datenbank abgerufen,
    -- in einem nachfolgenden zweiten Schritt wird jedem der Verkehrsteilnehmer (21, 22, 23, 24) eine jeweilige Fahrspurinformation ermittelt oder zugeordnet.

2. Verfahren nach Anspruch 1, **dadurch gekennzeichnet, dass** in einem ersten Teilschritt des zweiten Schritts jedem der Verkehrsteilnehmer (21, 22, 23, 24) eine jeweilige vorläufige Fahrspurinformation ermittelt oder zugeordnet wird, wobei in einem zweiten Teilschritt des zweiten Schritts geprüft wird, ob die vorläufige Fahrspurinformation anzupassen oder zu korrigieren ist, wobei, sofern die vorläufige Fahrspurinformation zu korrigieren ist, in einem dritten Teilschritt des zweiten Schritts auf der Basis der vorläufigen Fahrspurinformation eine korrigierte Fahrspurinformation für zumindest einen Teil der Verkehrsteilnehmer (21, 22, 23, 24) ermittelt oder zugeordnet wird, wobei in einem vierten Teilschritt des zweiten Schritts die korrigierte Fahrspurinformation als die Fahrspurinformation dem jeweiligen Verkehrsteilnehmer (21, 22, 23, 24) zugeordnet wird.

3. Verfahren nach einem der vorhergehenden Ansprüche, **dadurch gekennzeichnet, dass** vor der Durchführung des vierten Teilschritts der zweite Teilschritt und der dritte Teilschritt wiederholt, insbesondere iterativ, durchgeführt wird, wobei geprüft wird, ob die korrigierte Fahrspurinformation erneut zu korrigieren ist und, falls ja, eine weitere korrigierte Fahrspurinformation für zumindest einen Teil der Verkehrsteilnehmer (21, 22, 23, 24) ermittelt oder zugeordnet wird.

4. Verfahren nach einem der vorhergehenden Ansprüche, **dadurch gekennzeichnet, dass** der erste und zweite Schritt zur Ermittlung oder zur Zuordnung einer Fahrspurinformation

    -- durch den Verkehrsteilnehmer (21, 22, 23, 24) selbst oder durch eine Berechnungseinrichtung desselben oder
    -- durch eine extern zum Verkehrsteilnehmer (21, 22, 23, 24) existierende Einrichtung durchgeführt wird.

5. Verfahren nach einem der vorhergehenden Ansprüche, **dadurch gekennzeichnet, dass** die auf dem Streckenabschnitt (101) zu erfassende momentane Position und Geschwindigkeit der Verkehrsteilnehmer (21, 22, 23, 24) sowie die Fahrzeugtypinformation und/oder die Fahrzeugkategorieinformation durch Übermitteln - innerhalb eines geographischen Gebiets (100) - eines Nachrichteninhalts von einem stationären Sender (20) zu einem stationären Empfänger (25) über die Mehrzahl der mobilen Verkehrsteilnehmer (21, 22, 23, 24) erfolgt, wobei sowohl der Sender (20) als auch die Mehrzahl von mobilen Verkehrsteilnehmern (21, 22, 23, 24) Broadcast-Nachrichten mit einem Nachrichteninhalt zu senden in der Lage sind und wobei der stationäre Empfänger (25) in der Lage ist, Broadcast-Nachrichten zu empfangen, wobei der Nachrichteninhalt wenigstens einer Broadcast-Nachricht des Senders (20) an wenigstens einen der Mehrzahl von mobilen Verkehrsteilnehmern (21, 22, 23, 24) mittels der wenigstens einen Broadcast-Nachricht mittels einer PC5-Sidelink Funktionalität, insbesondere unter Nutzung der Mode-4-Funktionalität, gesendet wird,
    wobei das Verfahren zeitlich vor dem ersten Schritt die nachfolgenden Schritte umfasst:

-- in einem dritten Schritt empfängt der betrachtete Verkehrsteilnehmer wenigstens eine Broadcast-Nachricht, wobei der Nachrichteninhalt der wenigstens einen Broadcast-Nachricht wenigstens

-- eine Nachrichtenidentifikationsinformation,
-- eine Gebietsinformation zur Definition des geographischen Gebiets (100)
-- eine Wiederholungsinformation und
-- eine Aggregationszeitinformation

umfasst,
-- in einem nachfolgenden vierten Schritt sendet der betrachtete Verkehrsteilnehmer wenigstens eine weitere Broadcast-Nachricht, wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:

-- eine Positionsinformation der momentanen Position des betrachteten Verkehrsteilnehmers,
-- eine Geschwindigkeitsinformation des betrachteten Verkehrsteilnehmers
-- eine momentane Zeitstempelinformation und
-- eine Zusatzinformation

umfasst.

6. Verfahren nach einem der vorhergehenden Ansprüche, **dadurch gekennzeichnet, dass** das geographische Gebiet (100) den Streckenabschnitt (101) umfasst, wobei der Streckenabschnitt (101) insbesondere einem Streckenabschnitt eines Verkehrsweges, insbesondere einer Straße, etwa einer Schnellstraße oder Autobahn, entspricht oder das geographische Gebiet (100) den entsprechenden Bereich des Streckenabschnitts (101) definiert, wobei insbesondere die Gebietsinformation eine Richtungsinformation umfasst und/oder wobei die Gebietsinformation eine Positionsinformation des stationären Empfängers (25) umfasst.

7. Verfahren nach einem der vorhergehenden Ansprüche, **dadurch gekennzeichnet, dass** die Positionsinformation der momentanen Position des betrachteten Verkehrsteilnehmers eine Positionsinformation auf dem Streckenabschnitt (101) des Verkehrsweges ist und/oder dass die Zusatzinformation wenigstens eine der nachfolgenden Informationen umfasst:

-- eine Information zur maximalen Geschwindigkeit des Fahrzeugs,
-- eine das Fahrzeug identifizierende, insbesondere das Fahrzeug pseudonym identifizierende Information, wobei insbesondere die Fahrzeugtypinformation und/oder die Fahrzeugkategorieinformation angibt, ob es sich um einen Personenkraftwagen oder um einen Lastkraftwagen handelt und/oder ob es sich um einen Sportwagen oder um eine Limousine oder um einen Kombinationskraftwagen oder um ein Sports Utility Vehicle oder um einen Lastkraftwagen mit Anhänger handelt.

8. Verfahren nach einem der vorhergehenden Ansprüche, **dadurch gekennzeichnet, dass** der betrachtete Verkehrsteilnehmer die wenigstens eine weitere Broadcast-Nachricht lediglich dann sendet, wenn die momentane oder zuletzt ermittelte Position des betrachteten Verkehrsteilnehmers durch Positionsbestimmungsmittel des betrachteten Verkehrsteilnehmers als innerhalb des geographischen Gebiets (100) erkannt wird oder wenn der betrachtete Verkehrsteilnehmer durch die Positionsbestimmungsmittel als auf dem Abschnitt des Verkehrsweges befindlich erkannt wird und/oder auf dem Abschnitt des Verkehrsweges in Richtung oder entsprechend der Richtungsinformation sich fortbewegend erkannt wird.

9. Verfahren nach einem der vorhergehenden Ansprüche, **dadurch gekennzeichnet, dass** der betrachtete Verkehrsteilnehmer die wenigstens eine weitere Broadcast-Nachricht frühestens nach Ablauf eines Zeitintervalls nach dem im dritten Schritt erfolgenden Empfang der wenigstens einen Broadcast-Nachricht sendet, wobei das Zeitintervall der Aggregationszeitinformation entspricht oder als Teil der Aggregationszeitinformation definiert ist, wobei insbesondere die durch den betrachteten Verkehrsteilnehmer empfangene wenigstens eine Broadcast-Nachricht

-- eine vom stationären Sender (20) gesendete Broadcast-Nachricht ist oder
-- eine von einem anderen Verkehrsteilnehmer gesendete weitere Broadcast-Nachricht ist,

wobei das Verfahren insbesondere aufweist:

-- der betrachtete Verkehrsteilnehmer empfängt innerhalb des Zeitintervalls zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und
-- der betrachtete Verkehrsteilnehmer sendet die wenigstens eine weitere Broadcast-Nachricht derart, dass die wenigstens eine weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des Zeitintervalls von den zusätzlichen anderen Verkehrsteilnehmern empfangenen zusätzlichen weiteren Broadcast-Nachrichten umfasst,

wobei insbesondere die zusätzlichen Ergänzungsinformationen derart bereinigt werden, dass kein Verkehrsteilnehmer doppelt berücksichtigt ist.

10. Telekommunikationsnetz (100) oder System zur Ermittlung oder zur Zuordnung einer Fahrspurinformation bezüglich mehrerer sich auf einem Streckenabschnitt (101) befindender Verkehrsteilnehmer (21, 22, 23, 24), wobei zur Ermittlung oder zur Zuordnung der Fahrspurinformation bezüglich der Verkehrsteilnehmer (21, 22, 23, 24) die Erfassung

-- einer Positionsinformation der momentanen Position der Verkehrsteilnehmer (21, 22, 23, 24),
-- einer Geschwindigkeitsinformation der Verkehrsteilnehmer (21, 22, 23, 24) und
-- einer Fahrzeugtypinformation und/oder einer Fahrzeugkategorieinformation erfolgt,

wobei das Telekommunikationsnetz (100) oder das System zur Ermittlung oder zur Zuordnung der Fahrspurinformation für die mehreren Verkehrsteilnehmer (21, 22, 23, 24) derart konfiguriert ist, dass:

-- zu einem betrachteten Streckenabschnitt (101) wird die vorhandene Anzahl an Fahrspuren ermittelt oder von einer Datenbank abgerufen,
-- zu jedem der Verkehrsteilnehmer (21, 22, 23, 24) wird eine jeweilige Fahrspurinformation ermittelt oder zugeordnet.

11. Verkehrsteilnehmer zur Verwendung in einem Telekommunikationsnetz (100) oder in einem System nach Anspruch 10.

12. Computerprogramm umfassend Befehle, mit deren Hilfe die Schritte eines Verfahrens nach einem der Ansprüche 1 bis 9 durchführbar sind, wenn das Computerprogramm auf einer programmierbaren Einrichtung, insbesondere auf einem Netzknoten in Form eines stationären Senders (20) und/oder eines stationären Empfängers (25) und/oder eines mobilen Verkehrsteilnehmers (21, 22, 23, 24), ausgeführt wird.

13. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 12 speichert oder überträgt oder wobei das computerlesbare Medium oder das Datenträgersignal den auf der programmierbaren Einrichtung, insbesondere auf einem Netzknoten in Form eines stationären Senders (20) und/oder eines stationären Empfängers (25) und/oder eines mobilen Verkehrsteilnehmers (21, 22, 23, 24) auszuführenden Teil des Computerprogramms nach Anspruch 12 speichert oder überträgt.

**Geänderte Patentansprüche gemäss Regel 137(2) EPÜ.**

1. Verfahren zur Ermittlung oder zur Zuordnung einer Fahrspurinformation bezüglich mehrerer sich auf einem Streckenabschnitt (101) befindender Verkehrsteilnehmer (21, 22, 23, 24), wobei zur Ermittlung oder zur Zuordnung der Fahrspurinformation bezüglich der Verkehrsteilnehmer (21, 22, 23, 24) die Erfassung

-- einer Positionsinformation der momentanen Position der Verkehrsteilnehmer (21, 22, 23, 24),
-- einer Geschwindigkeitsinformation der Verkehrsteilnehmer (21, 22, 23, 24)
und
-- einer Fahrzeugtypinformation und/oder einer Fahrzeugkategorieinformation erfolgt,

wobei zur Ermittlung oder zur Zuordnung der Fahrspurinformation für die mehreren Verkehrsteilnehmer (21, 22, 23, 24) die nachfolgenden Schritte ausgeführt werden:

-- in einem ersten Schritt wird zu einem betrachteten Streckenabschnitt (101) die vorhandene Anzahl an Fahrspuren ermittelt oder von einer Datenbank abgerufen,
-- in einem nachfolgenden zweiten Schritt wird jedem der Verkehrsteilnehmer (21, 22, 23, 24) eine jeweilige Fahrspurinformation ermittelt oder zugeordnet, wobei die ermittelten oder zugeordneten Fahrspurinformationen in Abhängigkeit der Positionsinformationen und Geschwindigkeitsinformationen durch Anwendung von Plausibilitätsannahmen an Nachbarschaftsverhältnisse zwischen lokal benachbarten Verkehrsteilnehmern (21, 22, 23, 24) überprüft werden, wobei die Plausibilitätsannahmen die Annahme umfassen, dass es in der Vergangenheit zu keiner Überlappung zwischen den lokal benachbarten Verkehrsteilnehmern (21, 22, 23, 24) gekommen ist.

2. Verfahren nach Anspruch 1, **dadurch gekennzeichnet, dass** in einem ersten Teilschritt des zweiten Schritts jedem der Verkehrsteilnehmer (21, 22, 23, 24) eine jeweilige vorläufige Fahrspurinformation ermittelt oder zugeordnet wird, wobei in einem zweiten Teilschritt des zweiten Schritts geprüft wird, ob die vorläufige Fahrspurinformation anzupassen oder zu korrigieren ist, wobei, sofern die vorläufige Fahrspurinformation zu korrigieren ist, in einem dritten Teilschritt des zweiten Schritts auf der Basis der vorläufigen Fahrspurinformation eine korrigierte Fahrspurinformation für zumindest einen Teil der Verkehrsteilnehmer (21, 22, 23, 24) ermittelt oder zugeordnet wird, wobei in einem vierten Teilschritt des zweiten Schritts die korrigierte Fahrspurinformation als die Fahrspurinformation dem jeweiligen Verkehrsteilnehmer (21, 22, 23, 24) zugeordnet wird.

3. Verfahren nach einem der vorhergehenden Ansprüche, **dadurch gekennzeichnet, dass** vor der Durchführung des vierten Teilschritts der zweite Teilschritt und der dritte Teilschritt wiederholt, insbesondere iterativ, durchgeführt wird, wobei geprüft wird, ob die korrigierte Fahrspurinformation erneut zu korrigieren ist und, falls ja, eine weitere korrigierte Fahrspurinformation für zumindest einen Teil der Verkehrsteilnehmer (21, 22, 23, 24) ermittelt oder zugeordnet wird.

4. Verfahren nach einem der vorhergehenden Ansprüche, **dadurch gekennzeichnet, dass** der erste und zweite Schritt zur Ermittlung oder zur Zuordnung einer Fahrspurinformation

-- durch den Verkehrsteilnehmer (21, 22, 23, 24) selbst oder durch eine Berechnungseinrichtung desselben oder
-- durch eine extern zum Verkehrsteilnehmer (21, 22, 23, 24) existierende Einrichtung durchgeführt wird.

5. Verfahren nach einem der vorhergehenden Ansprüche, **dadurch gekennzeichnet, dass** die auf dem Streckenabschnitt (101) zu erfassende momentane Position und Geschwindigkeit der Verkehrsteilnehmer (21, 22, 23, 24) sowie die Fahrzeugtypinformation und/oder die Fahrzeugkategorieinformation durch Übermitteln - innerhalb eines geographischen Gebiets (100) - eines Nachrichteninhalts von einem stationären Sender (20) zu einem stationären Empfänger (25) über eine, von den Verkehrsteilnehmern (21, 22, 23, 24) gebildete Übertragungskette erfolgt, wobei sowohl der Sender (20) als auch die Mehrzahl von mobilen Verkehrsteilnehmern (21, 22, 23, 24) Broadcast-Nachrichten mit einem Nachrichteninhalt zu senden in der Lage sind und wobei der stationäre Empfänger (25) in der Lage ist, Broadcast-Nachrichten zu empfangen, wobei der Nachrichteninhalt wenigstens einer Broadcast-Nachricht des Senders (20) an wenigstens einen der Mehrzahl von mobilen Verkehrsteilnehmern (21, 22, 23, 24) mittels der wenigstens einen Broadcast-Nachricht mittels einer PC5-Sidelink Funktionalität, insbesondere unter Nutzung der Mode-4-Funktionalität, gesendet wird,

wobei das Verfahren zeitlich vor dem ersten Schritt für jeden betrachteten Verkehrsteilnehmer der Übertragungskette die nachfolgenden Schritte umfasst:

-- in einem dritten Schritt empfängt der betrachtete Verkehrsteilnehmer wenigstens eine Broadcast-Nachricht, wobei der Nachrichteninhalt der wenigstens einen Broadcast-Nachricht wenigstens

-- eine Nachrichtenidentifikationsinformation,
-- eine Gebietsinformation zur Definition des geographischen Gebiets (100)
-- eine Wiederholungsinformation und
-- eine Aggregationszeitinformation

umfasst,

-- in einem nachfolgenden vierten Schritt sendet der betrachtete Verkehrsteilnehmer wenigstens eine weitere Broadcast-Nachricht, wobei die wenigstens eine weitere Broadcast-Nachricht als ihren Nachrichteninhalt den Nachrichteninhalt der empfangenen wenigstens einen Broadcast-Nachricht und wenigstens eine Ergänzungsinformation umfasst, wobei die Ergänzungsinformation wenigstens:

-- eine Positionsinformation der momentanen Position des betrachteten Verkehrsteilnehmers,
-- eine Geschwindigkeitsinformation des betrachteten Verkehrsteilnehmers
-- eine momentane Zeitstempelinformation und
-- eine Zusatzinformation

umfasst,

wobei die Zusatzinformation wenigstens eine der nachfolgenden Informationen umfasst:

-- eine Fahrzeugtypinformation,
-- eine Fahrzeugkategorieinformation,
-- eine Information zur maximalen Geschwindigkeit des Fahrzeugs,
-- eine das Fahrzeug identifizierende Information,

wobei der betrachtete Verkehrsteilnehmer die wenigstens eine weitere Broadcast-Nachricht frühestens nach Ablauf eines Zeitintervalls nach dem im dritten Schritt erfolgenden Empfang der wenigstens einen Broadcast-Nachricht sendet, wobei das Zeitintervall der Aggregationszeitinformation entspricht oder als Teil der Aggregationszeitinformation definiert ist, wobei der vierte Schritt nach einem erneuten Ablauf des Zeitintervalls wiederholt wird.

6. Verfahren nach einem der vorhergehenden Ansprüche, **dadurch gekennzeichnet, dass** das geographische Gebiet (100) den Streckenabschnitt (101) umfasst, wobei der Streckenabschnitt (101) insbesondere einem Streckenabschnitt eines Verkehrsweges, insbesondere einer Straße, etwa einer Schnellstraße oder Autobahn, entspricht oder das geographische Gebiet (100) den entsprechenden Bereich des Streckenabschnitts (101) definiert, wobei insbesondere die Gebietsinformation eine Richtungsinformation umfasst und/oder wobei die Gebietsinformation eine Positionsinformation des stationären Empfängers (25) umfasst.

7. Verfahren nach einem der vorhergehenden Ansprüche, **dadurch gekennzeichnet, dass** die Fahrzeugtypinformation und/oder die Fahrzeugkategorieinformation angibt, ob es sich um einen Personenkraftwagen oder um einen Lastkraftwagen handelt und/oder ob es sich um einen Sportwagen oder um eine Limousine oder um einen Kombinationskraftwagen oder um ein Sports Utility Vehicle oder um einen Lastkraftwagen mit Anhänger handelt.

8. Verfahren nach einem der vorhergehenden Ansprüche, **dadurch gekennzeichnet, dass** der betrachtete Verkehrsteilnehmer die wenigstens eine weitere Broadcast-Nachricht lediglich dann sendet, wenn die momentane oder zuletzt ermittelte Position des betrachteten Verkehrsteilnehmers durch Positionsbestimmungsmittel des betrachteten Verkehrsteilnehmers als innerhalb des geographischen Gebiets (100) erkannt wird oder wenn der betrachtete Verkehrsteilnehmer durch die Positionsbestimmungsmittel als auf dem Abschnitt des Verkehrsweges befindlich erkannt wird und/oder auf dem Abschnitt des Verkehrsweges in Richtung oder entsprechend der Richtungsinformation sich fortbewegend erkannt wird.

9. Verfahren nach einem der vorhergehenden Ansprüche, **dadurch gekennzeichnet, dass** die durch den betrachteten Verkehrsteilnehmer empfangene wenigstens eine Broadcast-Nachricht

-- eine vom stationären Sender (20) gesendete Broadcast-Nachricht ist oder
-- eine von einem anderen Verkehrsteilnehmer gesendete weitere Broadcast-Nachricht ist,

wobei das Verfahren insbesondere aufweist:

-- der betrachtete Verkehrsteilnehmer empfängt innerhalb des Zeitintervalls zusätzliche weitere Broadcast-Nachrichten von zusätzlichen anderen Verkehrsteilnehmern, wobei die zusätzlichen weiteren Broadcast-Nachrichten, neben ihrer jeweiligen Nachrichtenidentifikationsinformation, Gebietsinformation, Wiederholungsinformation und Aggregationszeitinformation, jeweilige zusätzliche Ergänzungsinformationen aufweisen, und

-- der betrachtete Verkehrsteilnehmer sendet die wenigstens eine weitere Broadcast-Nachricht derart, dass die wenigstens eine weitere Broadcast-Nachricht als ihren Nachrichteninhalt den Nachrichteninhalt der wenigstens einen Broadcast-Nachricht umfasst und als Teil ihrer Ergänzungsinformationen die zusätzlichen Ergänzungsinformationen der innerhalb des Zeitintervalls von den zusätzlichen anderen Verkehrsteilnehmern empfangenen zusätzlichen weiteren Broadcast-Nachrichten umfasst.

10. System zur Ermittlung oder zur Zuordnung einer Fahrspurinformation bezüglich mehrerer sich auf einem Streckenabschnitt (101) befindender Verkehrsteilnehmer (21, 22, 23, 24), wobei das System die Verkehrsteilnehmer (21, 22, 23, 24) umfasst, wobei zur Ermittlung oder zur Zuordnung der Fahrspurinformation bezüglich der Verkehrsteilnehmer (21, 22, 23, 24) die Erfassung

-- einer Positionsinformation der momentanen Position der Verkehrsteilnehmer (21, 22, 23, 24),
-- einer Geschwindigkeitsinformation der Verkehrsteilnehmer (21, 22, 23, 24)
und
-- einer Fahrzeugtypinformation und/oder einer Fahrzeugkategorieinformation erfolgt,

wobei das Telekommunikationsnetz (100) oder das System zur Ermittlung oder zur Zuordnung der Fahrspurinformation für die mehreren Verkehrsteilnehmer (21, 22, 23, 24) derart konfiguriert ist, dass:

-- zu einem betrachteten Streckenabschnitt (101) wird die vorhandene Anzahl an Fahrspuren ermittelt oder von einer Datenbank abgerufen,
-- zu jedem der Verkehrsteilnehmer (21, 22, 23, 24) wird eine jeweilige Fahrspurinformation ermittelt oder zugeordnet, wobei die ermittelten oder zugeordneten Fahrspurinformationen in Abhängigkeit der Positionsinformationen und Geschwindigkeitsinformationen durch Anwendung von Plausibilitätsannahmen an Nachbarschaftsverhältnisse zwischen lokal benachbarten Verkehrsteilnehmern (21, 22, 23, 24) überprüft werden, wobei die Plausibilitätsannahmen die Annahme umfassen, dass es in der Vergangenheit zu keiner Überlappung zwischen den lokal benachbarten Verkehrsteilnehmern (21, 22, 23, 24) gekommen ist.

11. Verkehrsteilnehmer zur Verwendung in einem System nach Anspruch 10.

12. Computerprogramm umfassend Befehle, mit deren Hilfe die Schritte eines Verfahrens nach einem der Ansprüche 1 bis 9 durchführbar sind, wenn das Computerprogramm auf einer programmierbaren Einrichtung, insbesondere auf einem Netzknoten in Form eines stationären Senders (20) und/oder eines stationären Empfängers (25) und/oder eines mobilen Verkehrsteilnehmers (21, 22, 23, 24), ausgeführt wird.

13. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 12 speichert oder überträgt oder wobei das computerlesbare Medium oder das Datenträgersignal den auf der programmierbaren Einrichtung, insbesondere auf einem Netzknoten in Form eines stationären Senders (20) und/oder eines stationären Empfängers (25) und/oder eines mobilen Verkehrsteilnehmers (21, 22, 23, 24) auszuführenden Teil des Computerprogramms nach Anspruch 12 speichert oder überträgt.

**Fig. 1**

**Fig. 2**

Europäisches
Patentamt

European
Patent Office

Office européen
des brevets

# EUROPÄISCHER RECHERCHENBERICHT

**Nummer der Anmeldung**

EP 22 17 6477

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2019 117705 A1 (BAYERISCHE MOTOREN WERKE AG [DE]) 7. Januar 2021 (2021-01-07) | 1-4, 10-13 | INV.<br>G08G1/01<br>G08G1/16<br>H04W4/40<br>H04W88/04 |
| Y | * Absätze [0011], [0013], [0017], [0054] – [0056], [0047], [0048], [0108], [0111]; Abbildung 1b * | 5-9 | |
| | ----- | | |
| X | WO 2018/057393 A1 (PCMS HOLDINGS INC [US]) 29. März 2018 (2018-03-29) | 1-4, 10-13 | |
| Y | * Absätze [0005], [0033], [0040], [0075], [0105], [0116]; Abbildung 3a * | 5-9 | |
| | ----- | | |
| X | US 2011/109475 A1 (BASNAYAKE CHAMINDA [CA] ET AL) 12. Mai 2011 (2011-05-12) | 1-4, 10-13 | |
| Y | * Absätze [0002] – [0004], [0018], [0019], [0025] – [0027]; Abbildung 6 * | 5-9 | |
| | ----- | | |
| A | DE 10 2014 106048 B4 (DEUTSCH ZENTR LUFT & RAUMFAHRT [DE]) 14. Juni 2018 (2018-06-14) * Absätze [0049], [0078]; Abbildung 1 * | 4 | |
| | ----- | | **RECHERCHIERTE SACHGEBIETE (IPC)** |
| Y | DE 10 2011 009812 B3 (AUDI AG [DE]; AUDI ELECTRONICS VENTURE GMBH [DE]) 3. Mai 2012 (2012-05-03) * Absätze [0001], [0004], [0010], [0014], [0015], [0019], [0020], [0021], [0030], [0033]; Abbildung 2 * | 5-9 | H04W |
| | ----- | | |

Der vorliegende Recherchenbericht wurde für alle Patentansprüche erstellt

| Recherchenort | Abschlußdatum der Recherche | Prüfer |
|---|---|---|
| Den Haag | 25. November 2022 | Fagundes-Peters, D |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 17 6477

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-11-2022

| Im Recherchenbericht angeführtes Patentdokument | Datum der Veröffentlichung | Mitglied(er) der Patentfamilie | Datum der Veröffentlichung |
|---|---|---|---|
| DE 102019117705 A1 | 07-01-2021 | KEINE | |
| WO 2018057393 A1 | 29-03-2018 | EP 3516338 A1 | 31-07-2019 |
| | | US 2019204108 A1 | 04-07-2019 |
| | | WO 2018057393 A1 | 29-03-2018 |
| US 2011109475 A1 | 12-05-2011 | CN 102063798 A | 18-05-2011 |
| | | DE 102010050805 A1 | 04-08-2011 |
| | | US 2011109475 A1 | 12-05-2011 |
| DE 102014106048 B4 | 14-06-2018 | KEINE | |
| DE 102011009812 B3 | 03-05-2012 | KEINE | |

EPO FORM P0461

Für nähere Einzelheiten zu diesem Anhang : siehe Amtsblatt des Europäischen Patentamts, Nr.12/82